# EUROPÄISCHE PATENTSCHRIFT

(11) **EP 3 883 215 B1**
(45) Veröffentlichungstag und Bekanntmachung des Hinweises auf die Patenterteilung: **08.02.2023**
(21) Anmeldenummer: 21163654.3
(22) Anmeldetag: 19.03.2021
(51) Int. Cl.: G06F 16/27, H04L 9/32, H04L 9/00, H04L 9/06

(54) **PSEUDONYMVERKNÜPFUNGEN ZWISCHEN REGISTERN**
PSEUDONYMOUS LINKS BETWEEN REGISTERS
LIENS PSEUDONYMES ENTRE LES REGISTRES

(30) Priorität: 20.03.2020 DE 102020107806
(43) Veröffentlichungstag der Anmeldung: 22.09.2021
(73) Patentinhaber: Bundesdruckerei GmbH, 10969 Berlin (DE)
(72) Erfinder: BÖSCH, Christoph, 14558 Nuthetal (DE); KRAUS, Micha, 10827 Berlin (DE); MORGNER, Frank, 15537 Grünheide (DE)
(74) Vertreter: Richardt Patentanwälte PartG mbB

(56) Entgegenhaltungen:
- EP-A1- 2 631 837
- WO-A1-2018/104275
- US-A1- 2006 031 301

## Beschreibung

Die Erfindung betrifft ein Verfahren zum Erstellen von Pseudonymverknüpfungen zwischen Datensätzen einer Mehrzahl von Registern, sowie ein Verknüpfungscomputersystem und ein System zum Erstellen der Pseudonymverknüpfungen.

Daten werden in der modernen Informationsgesellschaft in vielfältigen Kontexten, insbesondere auch im behördlichen Verwaltungskontext, in unterschiedlichen Registern gespeichert, welche im Allgemeinen unabhängig voneinander verwaltete werden. Oftmals überschneiden sich dabei Datensätze unterschiedlicher Register inhaltlich.

Werden die Register unabhängig voneinander verwaltet, müssen Datenänderungen von jedem einzelnen eines der Register verwaltenden Registercomputersystem erfasst und zu Aktualisierungszwecken des entsprechenden Registers in dieses eingepflegt werden, was mit einem großen Aufwand verbunden ist. Insbesondere besteht dabei die Gefahr, dass die einzelnen Register inkonsistente Daten umfassen.

Es existieren beispielsweise zahlreiche behördliche Register, wie etwa Steuerregister, Melderegister, Geburtenregister, Eheregister, etc. Diese Register bei Änderungen, z.B. in Folge einer Heirat, gegenseitig abzugleichen und gegebenenfalls zu aktualisieren fällt schwer, da registerübergreifende Kennzeichnungen für zusammengehörige Datensätze bzw. Datensätze, welche der derselben Person zugeordnet sind, im Allgemeinen fehlen und beispielsweise aus Gründen des Datenschutzes zudem unerwünscht sind. Das Dokument US 2006/031301A1 offenbart ein Verfahren, wobei ein Proxy-Server Zugriff auf Datenbankeinträge ermöglicht, wobei die Einträge eines Nutzers unter Pseudonymen zugänglich sind.

Der Erfindung liegt demgegenüber die Aufgabe zugrunde, ein Verfahren zum Verknüpfen von Registern zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Erstellen von Pseudonymverknüpfungen zwischen Datensätzen einer Mehrzahl von Registern unter Verwendung eines Verknüpfungscomputersystems. Die Mehrzahl von Registern umfasst zumindest ein erstes und ein zweites Register. Jedes der Register umfasst jeweils eine Mehrzahl von Datensätzen, denen jeweils ein datensatzspezifisches Pseudonym zugeordnet ist und die jeweils eine registerspezifischen Datenstruktur aufweisen. Die registerspezifischen Datenstrukturen legen jeweils fest, welche Strukturelemente die Datensätze des jeweiligen Registers umfassen. Jedes der Register wird jeweils von einem Registercomputersystem verwaltet.

Das Verfahren umfasst:
- Senden einer Datenabfrage eines ersten Datensatzes des ersten Registers von dem Verknüpfungscomputersystem an ein das erste Register verwaltendes erstes Registercomputersystem, wobei die Datenabfrage zum Erstellen einer ersten Pseudonymverknüpfung zwischen dem ersten Datensatz und einem Datensatz des zweiten Registers Datenwerte abfragt, die in dem ersten Datensatz für ein oder mehreren ersten Strukturelementen gespeichert sind, welche den Datensätzen des ersten und des zweiten Registers gemäß den Datenstrukturen der beiden Register gemeinsam sind,
- Empfangen einer Antwort auf die erste Datenabfrage von dem ersten Registercomputersystem durch das Verknüpfungscomputersystem mit einem ersten Abfrageergebnis, welches die in dem ersten Datensatz gespeicherten Datenwerte der ersten Strukturelemente umfasst und mit einem öffentlichen kryptographischen Schlüssel des zweiten Registers verschlüsselt ist,
- Senden einer ersten Pseudonymabfrage mit dem verschlüsselten ersten Abfrageergebnis von dem Verknüpfungscomputersystem an ein das zweite Register verwaltendes zweites Registercomputersystem,
- falls das zweite Register einen zweiten Datensatz umfasst, in welchem für Strukturelemente, die mit den ersten Strukturelementen übereinstimmen, Datenwerte gespeichert sind, die mit den Datenwerten der ersten Strukturelemente übereinstimmen, Empfangen einer Antwort auf die erste Pseudonymabfrage von dem zweiten Registercomputersystem durch das Verknüpfungscomputersystem mit einem zweiten Pseudonym des zweiten Datensatzes,
- Speichern der ersten Pseudonymverknüpfung zwischen einem ersten Pseudonym des ersten Datensatzes und dem empfangenen zweiten Pseudonym des zweiten Datensatzes durch das Verknüpfungscomputersystem in einem Speicher des Verknüpfungscomputersystems.

Ausführungsformen können den Vorteil haben, dass nach Ausführungsformen beispielsweise keine direkte Kommunikation bzw. kein direkter Datenaustausch zwischen den Registercomputersystemen stattfindet und die einzelnen Register selbst somit keine Kenntnis davon haben, welche weiteren Register hinsichtlich möglicher Pseudonymverknüpfungen berücksichtigt werden. Ausführungsformen können den Vorteil haben, dass unter Verwendung des Verknüpfungscomputersystem als Vermittlungsinstanz für Datensätze eines ersten Registers einer Mehrzahl von zwei oder mehr Registern geprüft werden kann, ob ein zweites Register der Mehrzahl von Registern einen Datensatz umfasst, welcher für ein oder mehrere übereinstimmende Strukturelemente übereinstimmende Datenwerte gespeichert hat und mithin dem Datensatz des ersten Registers, für welchen die Prüfung erfolgt, zugehörig ist. Die Prüfung erfolgt dabei, ohne dass die zentrale Vermittlungsinstanz, d.h. das Verknüpfungscomputersystem, Zugriff auf Dateninhalte der Datensätze erhält, welche Gegenstand der Prüfung sind. Auch die Register bzw. Registercomputersysteme erhalten beispielsweise keine Information darüber für welche Register Verknüpfungen durch das Verknüpfungscomputersystem geprüft oder zwischen welchen Registern Verknüpfungen in Form von Pseudonymverknüpfungen erstellt und gespeichert werden. Die Register verarbeiten beispielsweise jeweils nur Pseudonyme ihrer eigenen Datensätze, Pseudonyme von Datensätze anderer Register der Mehrzahl von Registern bekommen die einzelnen Register beispielsweise nicht zu Gesicht. Die Pseudonymverknüpfungen sind beispielsweise nur dem Verknüpfungscomputersystem bekannt und werden von diesem nicht geteilt, insbesondere nicht mit den Registercomputersystemen. Wird nun ein Datensatz in einem der Register geändert kann unter Vermittlung des Verknüpfungscomputersystems anhand der Pseudonymverknüpfungen geprüft werden, ob die Änderung möglicherweise auch für andere Datensätze anderer Register maßgeblich sein könnte.

Datensätze des ersten Registers sind beispielsweise jeweils einer Person zugeordnet und umfassen als Strukturelemente jeweils neben einem Namen der entsprechenden Person, wie etwa Vorname und Nachname, eine Anschrift der entsprechenden Person, wie etwa Land, Stadt, Straße und/oder Hausnummer. Datensätze anderer Register können beispielsweise ebenfalls Personen zugeordnet sein und jeweils einen Namen der entsprechenden Person, wie etwa Vorname und Nachname, sowie eine Anschrift der entsprechenden Person, wie etwa Land, Stadt, Straße und/oder Hausnummer umfassen. Darüber hinaus können die Datensätze je nach Register auch noch andere Strukturelemente umfassen.

Die einzelnen Datensätze des ersten Registers können mittels der Pseudonymverknüpfung jeweils paarweise mit allen anderen Datensätzen der anderen Register verknüpft werden, welche derselben Person zugeordnet sind. Dass Datensätze derselben Person zugeordnet sind, ergibt sich beispielsweise daraus, dass in ihnen ein übereinstimmender Personenname gespeichert ist.

Werden in einem der Datensätze beispielsweise die Angaben zu einer Anschrift einer Person geändert, kann ausgehend von den Pseudonymverknüpfungen bestimmt werden, welche weiteren Datensätze in anderen Registern derselben Person zugeordnet sind. Dies ermöglicht es unter Vermittlung des Verknüpfungscomputersystems beispielsweise die entsprechende Anschriftsänderung an alle diejenigen Datensätze weiterzuleiten, welche die zu ändernde Anschrift für dieselbe Person gespeichert haben. Das Weiterleiten über das Verknüpfungscomputersystem kann wiederum in verschlüsselter Form erfolgen, beispielweise jeweils unter Verwendung eines öffentlichen kryptographischen Schlüssels des Empfängerregisters, in welchem eine analoge Anschriftsänderung umzusetzen ist.

Ausführungsformen können den Vorteil haben, dass in Form der, beispielsweise paarweisen, Pseudonymverknüpfungen Register miteinander verknüpft werden können, ohne dass hierzu eine zentrale Kennzeichnung der Datensätze notwendig ist. Insbesondere kann so ein pseudonymisierter Abgleich mehrerer Register ermöglicht werden, ohne dass ein zentrales Kennzeichen benötigt wird.

Unter einem Register wird eine systematische Sammlung von Daten verstanden, welche in Datensätze untergliedert ist, die jeweils eine einheitliche Struktur aufweisen. Diese Struktur der Datensätze wird von einer registerspezifischen Datenstruktur definiert. Die Datenstruktur umfasst Angaben zu den Strukturelementen und/oder deren Datenformat, welche die Datensätze umfassen. Bei den Strukturelementen handelt es sich beispielsweise um Datentypen bzw. Attribute, zu welchen in dem entsprechenden Datensatz Datenwerte gespeichert sind. Beispielsweise ist ein Register in Form einer Datenbank, wie etwa einer relationalen Datenbank implementiert. Eine solche Datenbank wird von einem Datenbankmanagementsystem (DBMS) nach bestimmten Kriterien verwaltet wird. Die Daten sind dabei in einer Vielzahl von Datensätzen organisiert. Unter einem Datenbankmanagementsystem oder DBMS wird ein elektronisches System zur Speicherung und Wiedergewinnung von Daten verstanden. Beispielsweise überwacht das DBMS, dass Daten in der Datenbank nur in Form von Datensätzen gemäß der vorgegebenen Datenstruktur gespeichert werden.

Beispielsweise kann ein einzelner Datensatz ein bestimmtes physisches Objekt, z.B. eine natürliche Person, repräsentieren. Bei der Person kann es sich z.B. um einen Bürger, einen Angestellten, einen Patienten, einen Kunden, etc. handeln. Der entsprechende Datensatz kann eine vordefinierte Menge von Attributwerten dieser Person beinhalten (z.B. Name oder Pseudonym, Alter, Größe, Gewicht, Geburtsdatum, Ausweisnummern, Sicherheitszertifikate, Authentifizierungscodes, biometrische Daten und andere). Diese Attribute sind beispielsweise die Strukturelemente des entsprechenden Datensatzes. Beispielsweise kann ein Datensatz eine Gruppe von inhaltlich zusammenhängenden (zu einem Objekt gehörenden) Strukturelementen in Form von Datenfeldern repräsentieren, z. B. Artikelnummer, Artikelgröße, Artikelfarbe, Artikelname oder ähnliches. Die Strukturelemente "Name", "Adresse" und "Geburtsdatum" könnten z.B. die logische Struktur eines Datensatzes zum Objekttyp "Person" bilden. In der Datenverarbeitung werden Daten in Form von Datensätzen in dem Register gespeichert, wobei sie Gegenstand der Verarbeitung von Computerprogrammen werden. Beispielsweise werden die Datensätzen von diesen erzeugt, gelesen, verändert und gelöscht.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender, weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Speicher" werden hier sowohl flüchtige als auch nichtflüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter Verwendung der Pseudonyme können beispielsweise über unterschiedliche Register verteilte Datensätze von ein und derselben Person miteinander verknüpft werden, sodass bei einer Änderung von ein oder mehreren Datenwerten in einem Datensätze der entsprechenden Person in einem der Register sämtliche verknüpfte Datensätze in den weiteren Registern, welche derselben Person zugeordnet sind, über die Änderung informiert werden können. Ferner kann die Änderung gegebenenfalls in ein oder mehrere der verknüpfte Datensätze in den weiteren Registern, welche derselben Person zugeordnet sind, übernommen werden. Ein Austausch der Pseudonyme der Datensätze der unterschiedlichen Register erfolgt dabei über das Verknüpfungscomputersystem, welches beispielsweise als eine Art Treuhänder fungiert. Ebenso kann ein Abgleich von Daten über das Verknüpfungscomputersystem, insbesondere in verschlüsselter Form, erfolgen. Mittels einer Verschlüsselung von abzugleichenden Daten kann sichergestellt werden, dass das Verknüpfungscomputersystem keine Kenntnis der entsprechenden Daten erlangen kann. Beispielsweise werden die Daten bzw. Datenwerte von dem Register, welche die entsprechenden Daten sendet, mit dem öffentlichen kryptographischen Schlüssel eines asymmetrischen Schlüsselpaars bzw. "Public Keys" des Registers verschlüsselt, welches die Daten empfangen soll. Dadurch, dass die Register nicht direkt miteinander kommunizieren, sondern die Daten über das Verknüpfungscomputersystem als Zwischeninstanz austauschen, kann sichergestellt werden, dass die einzelnen Register keine zusätzlichen Informationen der anderen an dem Verfahren beteiligten Register erhalten.

Durch eine Verknüpfung der Datensätze der Register unter Verwendung der Pseudonyme über das Verknüpfungscomputersystem kann beispielsweise ein Abgleich von Daten vereinfacht werden. Die Pseudonyme können über das Verknüpfungscomputersystem verknüpft werden, ohne dass das Verknüpfungscomputersystem im Zuge der Erstellung dieser Verknüpfungen Kenntnis über den Inhalt der Daten der verknüpften Datensätze erlangt und ohne dass verknüpften Register ihrerseits Kenntnisse darüber erlangen, wie ihre Datensätze mit Datensätzen anderer Register und/oder mit welchen Datensätzen anderer Register ihre Datensätze verknüpft sind. Aus Sicht der Register werden nur Pseudonyme eigener Datensätze bereitgestellt und Pseudonyme eigener Datensätze empfangen.

Nach Ausführungsformen werden zur Synchronisation von Datensätze aus zwei Registern Schnittmengen an gemeinsamen Daten der jeweiligen Register anonym unter Vermittlung des Verknüpfungscomputersystem ermittelt. Zunächst werden hierzu Schnittmengen der Strukturelemente der jeweiligen Register unter Verwendung von Datenstrukturen der entsprechenden Register bestimmt. Unter Verwendung dieser Schnittmengen an Strukturelementen kann das Verknüpfungscomputersystem beispielsweise Abfrageregeln zur Abfrage von Datenwerten für jede mögliche Registerpaarung ermitteln. Mit Hilfe eines asymmetrischen Verschlüsselungsverfahren kann das Verknüpfungscomputersystem ferner in die Lage versetzt werden, Pseudonyme der einzelnen Datensätze der jeweiligen Register zu erhalten, ohne in Kenntnis der Inhalte der entsprechenden Datensätze, d.h. der abgefragten Datenwerte, zu gelangen. Das Verknüpfungscomputersystem formuliert bzw. initiiert Abfragen an die einzelnen Register unter Verwendung von Public-Key-Kryptographie, d.h. Public-Key-Kryptosystemen bzw. asymmetrischen Kryptosystemen, um an die Pseudonyme miteinander zu verknüpfender Datensätze der Register zu gelangen, die entsprechenden Datensätze unter Verwendung der ermittelten Pseudonyme miteinander zu verknüpfen und die resultierenden Pseudonymverknüpfungen zu speichern.

Das Verknüpfungscomputersystem fungiert hier beispielsweise als ein Treuhänder, welcher Verknüpfungen zwischen den Datensätzen der Register verwaltet. Jedoch erhält das Verknüpfungscomputersystem in dieser Funktion nur Zugriff auf Pseudonyme der Datensätze der Register, d.h. das Verknüpfungscomputersystem besitzt Wissen darüber, welche der Datensätze miteinander Verknüpft sind, nicht jedoch den Dateninhalt der entsprechenden Datensätze. In den Datensätzen gespeicherte Datenwerte empfängt das Verknüpfungscomputersystem nur in verschlüsselter Form. Ausnahmen können abhängig von der konkreten Implementierung beispielsweise die Pseudonyme selbst sein, falls diese als Bestandteil der von ihnen identifizierten Datensätze in den Registern gespeichert werden.

Zwei Datensätze unterschiedlicher Register werden beispielsweise mittels einer Pseudonymverknüpfung miteinander verknüpft, falls diese Datensätze für zumindest ein gemeinsames Strukturelement übereinstimmende Datenwerte aufweisen. Zwei Datenwerte stimmen überein, wenn diese bis auf Datenformatvorgaben identisch sind. Beispielsweise stimmen zwei Datenwerte überein, wenn diese identisch sind. Beispielsweise stimmen zwei in unterschiedliche Datenformaten gespeicherte Datenwerte überein, wenn ein erster der beiden Datenwerte, welcher in einem ersten Datenformat gespeichert ist, nach einer Transformation in ein zweites Datenformat, in welchem der zweite der beiden Datenwerte gespeichert ist, identisch zu dem zweiten Datenwert ist.

Neben verschlüsselten Datenwerten erhält das Verknüpfungscomputersystem lediglich Zugriff auf Pseudonyme der in den Registern gespeicherten Datensätze sowie auf Informationen zu den registerspezifischen Datenstrukturen, gemäß denen die Datensätze sowie die in den Datensätzen gespeicherten Datenwerte in dem jeweiligen Register strukturiert sind.

Bei den Pseudonymen handelt es sich um eindeutige Identifikatoren der Datensätze, aus welchen keine Rückschlüsse auf den Inhalt der entsprechenden Datensätze möglich ist. Beispielsweise handelt es sich bei den Pseudonymen um Identifikationscodes, wie etwa eine Identifikationsnummer. Beispielsweise kann es sich im Falle eines Steuerregisters bei dem Pseudonym um eine Steueridentifikationsnummer handeln. Bei einem Identifikationscode eines Datensatzes handelt es sich beispielsweise um eine Folge von alphanummerischen Zeichen, welche den Datensatz eindeutig identifiziert, deren Erzeugung aber unabhängig von Inhalt des Datensatzes ist. Der Identifikationscode umfasst keine weiteren Informationen, insbesondere lässt er keine Rückschlüsse auf die weiteren in dem entsprechenden Datensatz gespeicherten Datenwerte zu. Alternativ kann das Pseudonym aus dem Datensatz bzw. seinem Inhalt erzeugt werden. Beispielsweise durch Anwendung einer kryptographischen Funktion, insbesondere einer kryptographischen Einwegfunktion. Beispielsweise handelt es sich bei der kryptographischen Funktion um eine Verschlüsselung mit dem öffentlichen kryptographischen Schlüssel oder einem symmetrischen kryptographischen Schlüssel. Beispielsweise handelt es sich bei der kryptographischen Einwegfunktion um eine Einwegfunktion in Form einer Hashfunktion.

Bei den Pseudonymen handelt es sich um datensatzspezifische Pseudonyme, welche für die einzelnen Datensätze innerhalb eines Registers jeweils eindeutig sind. Nach Ausführungsformen sind die Pseudonyme für die einzelnen Datensätze über alle Register hinweg jeweils eindeutig. Ausnahmen können beispielsweise auftreten, wenn Datensätze unterschiedlicher Register identisch sind, Pseudonyme aus Datenwerten berechnet werden, welche registerweise eindeutig sind, aber in identischer Form in, beispielsweise verknüpften, Datensätzen unterschiedlicher Register auftreten können, oder Pseudonyme beispielsweise als fortlaufende Nummern der Register in den jeweiligen Registern vergeben werden.

Nach Ausführungsformen umfasst das Abfrageergebnis eine Auflistung der abgefragten Datenwerte des ersten Datensatzes. Um das zweite Register nach einem Datensatz zu durchsuchen, welcher übereinstimmende Datenwerte umfasst, muss die Auflistung der abgefragten Datenwerte von dem zweiten Registercomputersystem als eine Suchanfrage innerhalb des zweiten Registers umformuliert werden. Nach Ausführungsformen ist das Abfrageergebnis bereits als eine Suchanfrage nach den abgefragten Datenwerte des ersten Datensatzes innerhalb des zweiten Registers formuliert.

Nach Ausführungsformen umfasst die Datenabfrage des ersten Datensatzes zum Identifizieren des abzufragenden ersten Datensatzes das erste Pseudonym des ersten Datensatzes. Ausführungsformen können den Vorteil haben, dass das Verknüpfungscomputersystem gezielt steuern kann von welchem Datensatz des ersten Registers Datenwerte abgefragt werden.

Nach Ausführungsformen umfasst die Datenabfrage des ersten Datensatzes den öffentlichen kryptographischen Schlüssel des zweiten Registers. Ausführungsformen können den Vorteil haben, dass dem ersten Registercomputersystem auf diese Weise der öffentlichen kryptographische Schlüssel zum Verschlüsseln des Abfrageergebnisses bereitgestellt werden kann. Alternativ kann der öffentlichen kryptographische Schlüssel bei dem ersten Registercomputersystem hinterlegt sein, etwa in Form einer Liste von öffentlichen kryptographischen Schlüsseln, welche den Registercomputersystemen beispielsweise von dem Verknüpfungscomputersystem zur Verfügung gestellt wird. In diesem Fall umfasst die Datenabfrage des ersten Datensatzes beispielsweise eine Angabe, welcher der öffentlichen kryptographischen Schlüssel der Liste zur Verschlüsslung zu verwenden ist. Bei dieser Angabe könnte es sich beispielsweise um eine Listenposition handeln.

Nach Ausführungsformen umfasst die Antwort auf die erste Datenabfrage des ersten Datensatzes das erste Pseudonym des ersten Datensatzes. Ausführungsformen können den Vorteil haben, dass die Datenabfrage des Verknüpfungscomputersystem beispielsweise nicht identifiziert, von welchem der Datensätze des ersten Registers Datenwerte, die in dem entsprechenden Datensatz für ein oder mehreren abzufragende Strukturelemente gespeichert sind, abgefragt werden sollen. Vielmehr kann es sich bei der Datenabfrage um eine Aufforderung an das erste Registercomputersystem handeln sukzessive alle Datensätze des ersten Registers nach Datenwerte abzufragen, die in den entsprechenden Datensätzen für die ersten Strukturelementen gespeichert sind. Die Antwort des ersten Registercomputersystems auf die Datenabfrage kann verschlüsselte Abfrageergebnisse für eine Mehrzahl und/oder alle Datensätze des ersten Registers umfassen. Jedem der Abfrageergebnisse ist beispielsweise ein unverschlüsseltes Pseudonym desjenigen Datensatzes zugeordnet für welchen das entsprechende Abfrageergebnis erstellt wurde. Alternativ kann das ersten Registercomputersystems auf die Datenabfrage sukzessive eine Mehrzahl von Antworten schicken, welche jeweils ein oder mehrere Abfrageergebnis umfassen, wobei jedem der Abfrageergebnisse jeweils ein Pseudonym zugeordnet ist. Auf diese Weise können die Pseudonyme der ersten Datensätze an das Verknüpfungscomputersystem übertragen werden, ohne dass hierfür eine zusätzliche Abfrage nötig wäre.

Das Verknüpfungscomputersystem fragt beispielsweise bei dem ersten Registercomputersystem, welches das erste Register (A) verwaltet, das Pseudonym für einen ersten Datensatz des Registers A an. Dabei übermittelt das Verknüpfungscomputersystem beispielsweise den öffentlichen kryptographischen Schlüssel eines zweiten Registers (B), mit welchem der abgefragte Datensatz verknüpft werden soll. Das heißt, es soll beispielsweise eine Pseudonymverknüpfung zwischen einem Datensatz des ersten Registers A und einem Datensatz des zweiten Registers B ermittelt werden. Dabei kann das Verknüpfungscomputersystem beispielsweise auch Abfrageregeln für des zweiten Registers B übermitteln. In Antwort auf die Abfrage empfängt das Verknüpfungscomputersystem von dem ersten Register A beispielsweise das Pseudonym des ersten Datensatzes des Registers A und speichert dieses. Ferner empfängt das Verknüpfungscomputersystem von dem ersten Register A beispielsweise ein mit dem öffentlichen kryptographischen Schlüssel des zweiten Registers B verschlüsseltes Abfrageergebnis mit Datenwerten des ersten Datensatzes des ersten Registers A, welches das Verknüpfungscomputersystem an ein das zweite Register B verwaltendes zweites Registercomputersystem übermittelt. In Antwort auf das verschlüsselte Abfrageergebnis liefert das zweite Register B ein zweites Pseudonym eines zweiten Datensatzes des zweiten Registers B zurück, welches das Verknüpfungscomputersystem mit dem ersten Pseudonym von dem ersten Register A verknüpft und speichert. Diese Abfrage kann über alle Datensätze aller Registerpaare wiederholt werden, bis alle Pseudonyme verknüpft und gespeichert sind. Bei N Registern A, B, C, ..., N-1, N wären die Registerpaare beispielsweise (A;B), (A;C), ... (A;N), (B;C), ..., (B;N), ..., (C;N), ..., (N-1;N), d.h. es können beispielsweise (N-1)! Registerpaare gebildet werden. Die Reihenfolge der Register innerhalb der Paarungen ist dabei beispielsweise vernachlässigbar.

Nach Ausführungsformen umfasst das Verfahren ferner ein Empfangen eines Erstellungshinweis über ein Erstellen eines zusätzlichen Datensatzes in dem ersten Register von dem ersten Registercomputersystem durch das Verknüpfungscomputersystem, wobei der Erstellungshinweis vorzugsweise ein Pseudonym des erstellten Datensatzes umfasst. Ausführungsformen können den Vorteil haben, dass das Verknüpfungscomputersystem auf diese Weise über Ergänzungen der Register informiert werden kann und zugleich Kenntnis über zusätzliche Pseudonyme der erstellten zusätzlichen Datensätze erlangen kann. Nach Ausführungsformen sendet das Verknüpfungscomputersystem in Antwort auf den Empfang des Erstellungshinweises eine Datenabfrage des erstellten zusätzlichen Datensatzes des ersten Registers an das erste Registercomputersystem, um auch für den erstellten zusätzlichen Datensatz wie zuvor beschrieben Pseudonymverknüpfungen zu bestimmen und zu speichern.

Nach Ausführungsformen umfasst das Verfahren ferner für jeden weiteren Datensatz der Mehrzahl von Datensätzen des ersten Registers jeweils:
- Senden einer Datenabfrage des jeweiligen weiteren Datensatzes des ersten Registers von dem Verknüpfungscomputersystem an das erste Registercomputersystem, wobei die Datenabfrage zum Erstellen weiterer Pseudonymverknüpfungen zwischen dem jeweiligen weiteren Datensatz und einem Datensatz des zweiten Registers Datenwerte abfragt, die in dem jeweiligen weiteren Datensatz für die ein oder mehreren ersten Strukturelementen gespeichert sind, welche den Datensätzen des ersten und des zweiten Registers gemeinsam sind,
- Empfangen einer Antwort auf die Datenabfrage des jeweiligen weiteren Datensatzes von dem ersten Registercomputersystem durch das Verknüpfungscomputersystem mit einem weiteren Abfrageergebnis, welches die in dem jeweiligen weiteren Datensatz gespeicherten Datenwerte der ersten Strukturelemente umfasst und mit dem öffentlichen kryptographischen Schlüssel des zweiten Registers verschlüsselt ist,
- Senden einer Pseudonymabfrage für den jeweiligen weiteren Datensatz mit dem verschlüsselten weiteren Abfrageergebnisse von dem Verknüpfungscomputersystem an das zweite Registercomputersystem,
- falls das zweite Register einen Datensatz umfasst, in welchem für Strukturelemente, die mit den ersten Strukturelementen übereinstimmen, Datenwerte gespeichert sind, die mit den Datenwerten der ersten Strukturelemente des weiteren Datensatzes übereinstimmen, Empfangen einer Antwort auf die Pseudonymabfrage für den jeweiligen weiteren Datensatz von dem zweiten Registercomputersystem durch das Verknüpfungscomputersystem mit einem weiteren zweiten Pseudonym des jeweiligen weiteren Datensatzes des zweiten Registers,
- Speichern einer weiteren Pseudonymverknüpfung zwischen einem weiteren ersten Pseudonym des jeweiligen weiteren Datensatzes des ersten Registers und dem empfangenen weiteren zweiten Pseudonym des jeweiligen weiteren Datensatzes des zweiten Registers durch das Verknüpfungscomputersystem in einem Speicher des Verknüpfungscomputersystems.

Ausführungsformen können den Vorteil haben, dass beispielsweise in Form einer Schleife alle Datensätze des ersten Registers auf mögliche Pseudonymverknüpfungen mit Datensätzen des zweiten Registers geprüft und entsprechende Pseudonymverknüpfungen gegebenenfalls bestimmt sowie gespeichert werden können.

Nach Ausführungsformen umfasst die Datenabfrage des jeweiligen weiteren Datensatzes des ersten Registers zum Identifizieren des jeweiligen weiteren Datensatzes das weitere erste Pseudonym des jeweiligen weiteren Datensatzes. Nach Ausführungsformen umfasst die Datenabfrage des jeweiligen weiteren Datensatzes des ersten Registers den öffentlichen kryptographischen Schlüssel des zweiten Registers. Nach Ausführungsformen umfasst die Antwort auf die Datenabfrage des jeweiligen weiteren Datensatzes des ersten Registers das weitere ersten Pseudonym des jeweiligen weiteren Datensatzes.

Nach Ausführungsformen umfasst das Verfahren ferner ein Bestimmen dritter Register der Mehrzahl von Registern neben dem zweiten Register, deren Datensätze gemäß ihrer jeweiligen registerspezifischen Datenstruktur ein oder mehrere weitere Strukturelemente mit den Datensätzen des ersten Registers gemeinsam haben. Von dem Verknüpfungscomputersystem wird für jedes der dritten Register jeweils eine weitere Datenabfrage des ersten Datensatzes an das erste Registercomputersystem gesendet, eine Antwort auf die entsprechende weitere Datenabfrage des ersten Datensatzes mit einem weiteren ersten Abfrageergebnis des ersten Datensatzes wird empfangen, welches mit einem öffentlichen kryptographischen Schlüssel des entsprechenden dritten Registers verschlüsselt ist, eine weitere erste Pseudonymabfrage mit dem verschlüsselten weiteren ersten Abfrageergebnis wird an ein das entsprechende dritte Register verwaltendes dritte Registercomputersystem gesendet und, falls das entsprechende dritte Register einen dritten Datensatz umfasst, in welchen mit dem weiteren ersten Abfrageergebnis übereinstimmende Datenwerte für übereinstimmende Strukturelemente gespeichert sind, wird eine Antwort auf die weitere erste Pseudonymabfrage mit einem dritten Pseudonym des dritten Datensatzes vom dem entsprechenden dritten Registercomputersystem empfangen und eine weitere Pseudonymverknüpfung zwischen dem ersten Pseudonym des ersten Datensatzes und dem empfangenen dritten Pseudonym des dritten Datensatzes in einem Speicher des Verknüpfungscomputersystems gespeichert.

Ausführungsformen können den Vorteil haben, dass so auch Pseudonymverknüpfungen des ersten Datensatzes mit Datensätzen aus den anderen Registern der Mehrzahl von Registern geprüft und entsprechende Pseudonymverknüpfungen gegebenenfalls bestimmt sowie gespeichert werden können.

Nach Ausführungsformen umfasst die weitere Datenabfrage des ersten Datensatzes zum Identifizieren des abzufragenden ersten Datensatzes das erste Pseudonym des ersten Datensatzes. Nach Ausführungsformen umfasst die Antwort auf die weitere Datenabfrage des ersten Datensatzes das erste Pseudonym des ersten Datensatzes. Nach Ausführungsformen umfasst die weitere erste Datenabfrage des ersten Datensatzes den öffentlichen kryptographischen Schlüssel des entsprechenden dritten Registers.

Nach Ausführungsformen wird für jeden weiteren Datensatz der Mehrzahl von Datensätzen des ersten Registers von dem Verknüpfungscomputersystem für jedes der bestimmten dritten Register eine weitere Datenabfrage des entsprechenden weiteren Datensatzes des ersten Registers an das erste Registercomputersystem gesendet, eine Antwort auf die entsprechende weitere Datenabfrage mit einem weiteren Abfrageergebnis des entsprechenden weiteren Datensatzes des ersten Registers wird empfangen, welches mit einem öffentlichen kryptographischen Schlüssel des entsprechenden dritten Registers verschlüsselt ist, eine weitere Pseudonymabfrage mit dem verschlüsselten weiteren Abfrageergebnis wird an das entsprechende dritte Registercomputersystem gesendet und, falls das entsprechende dritte Register einen vierten Datensatz umfasst, in welchen mit dem weiteren Abfrageergebnis übereinstimmende Datenwerte übereinstimmender Strukturelemente gespeichert sind, wird eine Antwort auf die weitere Pseudonymabfrage mit einem vierten Pseudonym des vierten Datensatzes vom dem entsprechenden dritten Registercomputersystem empfangen und eine weitere Pseudonymverknüpfung zwischen dem weiteren ersten Pseudonym des jeweiligen weiteren Datensatzes des ersten Registers und dem vierten Pseudonym des vierten Datensatzes in einem Speicher des Verknüpfungscomputersystems gespeichert.

Ausführungsformen können den Vorteil haben, dass beispielsweise in Form von weiteren Schleifen über die Datensätze des ersten Registers für jedes weitere Register der Mehrzahl von Registern, deren Datensätze gemäß ihrer jeweiligen registerspezifischen Datenstruktur ein oder mehrere weitere Strukturelemente mit den Datensätzen des ersten Registers gemeinsam haben, die Datensätze des ersten Registers auf mögliche Pseudonymverknüpfungen mit Datensätzen der weiteren Registers geprüft und entsprechende Pseudonymverknüpfungen gegebenenfalls bestimmt sowie gespeichert werden können. Somit können sukzessive alle Registerpaarungen des ersten Registers mit den anderen Registern der Mehrzahl von Registern erfasst werden.

Nach Ausführungsformen umfasst die weitere Datenabfrage des entsprechenden weiteren Datensatzes des ersten Registers zum Identifizieren des abzufragenden weiteren Datensatzes das weitere erste Pseudonym des entsprechenden weiteren Datensatzes des ersten Registers. Nach Ausführungsformen umfasst die Antwort auf die weitere Datenabfrage des entsprechenden weiteren Datensatzes des ersten Registers das weitere erste Pseudonym des ersten Datensatzes des ersten Registers. Nach Ausführungsformen umfasst die weitere Datenabfrage des entsprechenden weiteren Datensatzes des ersten Registers den öffentlichen kryptographischen Schlüssel des entsprechenden dritten Registers.

Nach Ausführungsformen umfasst die Mehrzahl von Registern N Register, wobei N eine natürliche Zahl größer zwei ist. Von dem Verknüpfungscomputersystem wird ferner beginnend mit dem zweiten Register jedes der Register bis zum (N-1)-ten Register der Reihe nach darauf geprüft, ob für einen der Datensätze das entsprechende n-te Register, wobei n eine natürliche Zahl von 2 bis N-1 ist, eines der Register n+1 bis N, welchen ein oder mehrere Strukturelemente mit dem n-ten Register gemeinsam sind, einen Datensatz umfasst, in welchem für die ein oder mehrere gemeinsamen Strukturelemente übereinstimmende Datenwerte gespeichert sind, und, falls ein Datensatz mit entsprechenden übereinstimmenden Datenwerte für gemeinsame Strukturelemente in einem der Register n+1 bis N ermittelt wird, wird eine Pseudonymverknüpfung zwischen einem Pseudonym des geprüften Datensatzes des n-ten Registers und einem Pseudonym des ermittelten Datensatzes in dem Speicher des Verknüpfungscomputersystems gespeichert.

Ausführungsformen können den Vorteil haben, dass beispielsweise in Form von weiteren Schleifen sukzessive für alle (N-1)! möglichen Registerpaare, sofern deren Datensätze gemäß ihrer jeweiligen registerspezifischen Datenstruktur ein oder mehrere Strukturelemente gemeinsam haben, Datensätze der entsprechenden Registerpaare auf mögliche Pseudonymverknüpfungen geprüft und entsprechende Pseudonymverknüpfungen gegebenenfalls bestimmt sowie gespeichert werden können. Somit können sukzessive alle Registerpaarungen aller Register der Mehrzahl von erfasst werden.

Nach Ausführungsformen umfasst das Verfahren ferner:
- Empfangen einer Definition der ersten Datenstruktur des ersten Registers von dem ersten Registercomputersystem durch das Verknüpfungscomputersystem,
- Empfangen einer Definition der zweiten Datenstruktur des zweiten Registers von dem zweiten Registercomputersystem durch das Verknüpfungscomputersystem,
- Bestimmen der ersten Strukturelemente durch das Verknüpfungscomputersystem, welche den Datensätzen des ersten und des zweiten Registers gemäß einem Abgleich der beiden empfangenen Datenstrukturen der beiden Register gemeinsam sind.

Ausführungsformen können den Vorteil haben, dass Strukturelemente durch das Verknüpfungscomputersystem bestimmt werden können, welche den Datensätzen beider Register gemeinsam sind, ohne dass das Verknüpfungscomputersystem Kenntnis von Dateninhalten der Strukturelemente erhält, welche in den Registern gespeichert sind. Ferner kann das Verknüpfungscomputersystem durch einen solchen Abgleich von Datenstrukturen für jede Registerpaarung jeweils prüfen, ob es strukturelle Gemeinsamkeiten zwischen den Datensätzen bestehen und eine Prüfung auf mögliche Pseudonymverknüpfungen sinnvoll ist.

Beispielsweise können die beiden Register als relationale Datenbanken konfiguriert sein, wobei es sich bei den Tupeln der Relation um die Datensätze handelt. Die Strukturelemente der Datensätze, welche definieren, welche Typen von Daten die Datensätze umfassen, sind die Attribute bzw. Felder der Relation. Beispielsweise umfasst die Datenstrukturen jeweils eine Angabe des Relationenschema der jeweiligen Relationen, welche Anzahl und Typ der Attribute für die entsprechende Relation festlegen. Durch einen Abgleich der Relationenschemas der Register können Attribute bestimmt werden, welche den Relationen der unterschiedlichen Register gemeinsam sind. Ferner können Datensätze, welche für übereinstimmende Attribute übereinstimmende Datenwerte bzw. Attributwerte aufweisen, über eine Pseudonymverknüpfung miteinander verknüpft werden.

Nach Ausführungsformen ist es eine Voraussetzung für eine Verwendung der bestimmten ersten Strukturelemente zum Erstellen einer Pseudonymverknüpfung, dass die ein oder mehreren ersten Strukturelemente zumindest ein oder mehrere Strukturelemente deren Datenwerte für sich genommen und/oder in Kombination miteinander jeweils eindeutig für die Datensätze sind. Ausführungsformen können den Vorteil haben, dass eine Verknüpfung beliebiger Datensätze aufgrund von zufälligen Datenübereinstimmungen vermieden werden kann. Beispielsweise kann in personenbezogene Datensätze unterschiedlicher Register dieselbe Anschrift gespeichert sein, obwohl die Datensätze sich auf unterschiedliche Personen beziehen bzw. unterschiedlichen Personen zugeordnet sind, welche nur zufällig im selben Gebäude wohnen. Eine Pseudonymverknüpfung zwischen solchen eigentlich nicht zueinander gehörigen Datensätzen könnte zur Folge haben, dass auf ein Anschriftsänderung einer der beiden Personen in dem Datensatz des einen Registers eine analoge Anschriftsänderung der identischen Anschrift der zweiten Person in dem Datensatz des anderen Registers initiiert werden könnte, obwohl sich die Anschrift der zweiten Person tatsächlich gar nicht geändert hat. Zur Vermeidung von Pseudonymverknüpfung zwischen solchen eigentlich nicht zueinander gehörigen Datensätzen kann beispielsweise als Voraussetzung für ein Erstellen einer Pseudonymverknüpfung festgelegt werden, dass die Strukturelemente entsprechenden Datensätze, welche auf Übereinstimmung geprüft werden, Angaben zu Namen, Anschrift, Geburtsdatum, Telefonnummer, Handynummer und/oder E-Mailaddresse umfassen müssen, welche für sich genommen und/oder in Kombination miteinander jeweils eindeutig für die Datensätze sind.

Nach Ausführungsformen empfängt das Verknüpfungscomputersystem von jedem der Register der Mehrzahl von Registern jeweils eine Datenstruktur des entsprechenden Registers von einem das entsprechende Register verwaltenden Registercomputersystem. Das Verknüpfungscomputersystem bestimmt für jede paarweise Kombination der Register der Mehrzahl von Registern jeweils, welche ein oder mehreren Strukturelementen der Datensätze der beiden Register der entsprechenden paarweisen Kombination den Datensätzen beider Register gemeinsam sind.

Ausführungsformen können den Vorteil haben, dass für alle paarweisen Kombinationen der Register anhand der bestimmten Strukturelemente der Datensätze der beiden Register der entsprechenden paarweise Kombination, welche den Datensätzen beider Register gemeinsam sind, bestimmt werden kann, ob Datensätze dieser Register zusammengehören können, d.h. auf mögliche Pseudonymverknüpfungen zu prüfen sind. Haben die Datensätze der Register keine Strukturelemente geneinsam oder nur Strukturelemente, welche für die Datensätze nicht eindeutig sind, kann sich eine Datenabfragen von Strukturelementen zur Prüfung von möglichen Pseudonymverknüpfungen erübrigen.

Ferner kann so für die paarweisen Kombination der Register anhand der bestimmten Strukturelemente jeweils festgelegt werden, welche Strukturelemente bei den Datenabfragen zur Prüfung von möglichen Pseudonymverknüpfungen zwischen den entsprechenden Registern abzufragen sind.

Nach Ausführungsformen ist es eine Voraussetzung für eine Verwendung der bestimmten Strukturelemente zum Erstellen einer Pseudonymverknüpfung, dass die bestimmten Strukturelemente zumindest ein oder mehrere Strukturelemente deren Datenwerte für sich genommen und/oder in Kombination miteinander jeweils eindeutig für die Datensätze sind.

Nach Ausführungsformen speichert das Verknüpfungscomputersystem die empfangenen Datenstrukturen in einem Speicher des Verknüpfungscomputersystems.

Nach Ausführungsformen speichert das Verknüpfungscomputersystem für jede der paarweisen Kombination der Register der Mehrzahl von Registern jeweils die bestimmten Strukturelemente, welche den Datensätze der beiden Register der entsprechenden paarweise Kombination gemeinsam sind, in einem Speicher des Verknüpfungscomputersystems.

Beispielsweise fragt das Verknüpfungscomputersystem die Datenstrukturen der einzelnen Register ab und bildet Schnittmengen über die gemeinsamen Strukturelemente bzw. Felder für jedes Registerpaar. Zusätzlich speichert das Verknüpfungscomputersystem für die Registerpaare beispielsweise die öffentlichen kryptographischen Schlüssel der entsprechenden Register.

Nach Ausführungsformen legen die registerspezifischen Datenstrukturen für die Strukturelemente der Datensätzen des entsprechenden Registers ferner jeweils Datenformate fest, in welchen Datenwerte der entsprechenden Strukturelemente in den entsprechenden Datensätzen gespeichert werden. Ausführungsformen können den Vorteil haben, dass unter Verwendung der registerspezifischen Datenstrukturen Unterschiede zwischen den Datenformaten der Register berücksichtigt werden können. Beispielsweise werden Datenwerte für übereinstimmende Strukturelemente in unterschiedlichen Registern in unterschiedlichen Datenformaten abgespeichert. Im Fall von Registern, welche in Form von relationalen Datenbanken bereitgestellt werden, können beispielsweise Attributwerte identischer Attribute in unterschiedlichen Registern unter Verwendung unterschiedlicher Datenformate abgespeichert werden. Das Datenformat kann beispielsweise die Länge der gespeicherten Datenwerte, etwa die verwendete Stringlänge, definieren, ob Zahlen kleiner Zehn bei Datumsangaben mit oder ohne vorangestellter "0" gespeichert werden, oder wie Sonderzeichen und Umlaute gespeichert werden.

Nach Ausführungsformen umfasst das Verfahren ferner ein Bestimmen von ersten Abfrageregeln für die ersten Strukturelemente. Die ersten Abfrageregeln definieren für diejenigen Strukturelemente der ersten Strukturelemente, deren Datenwerte in den Datensätzen des ersten Registers jeweils in einem ersten Datenformat gespeichert sind, welches sich von einem zweiten Datenformat unterscheidet, in welchem Datenwerte der entsprechenden Strukturelemente in Datensätzen des zweiten Registers jeweils gespeichert sind, eine Transformation der jeweiligen ersten Datenformate in die jeweiligen zweiten Datenformate.

Formatunterschiede bei der Speicherung eigentlich übereinstimmender Datenwerte können dazu führen, dass bei einer Registerabfrage eines der Register mit nach Übereinstimmungen mit Datenwerten aus einem anderen Register die übereinstimmenden Datenwerte nicht gefunden werden, falls für die Abfrage das Datenformt des anderen Registers verwendet wird. Ausführungsformen können den Vorteil haben, dass durch eine entsprechende Transformation der Datenformate in das Datenformat desjenigen Registers, welches nach übereinstimmenden Datenwerten für übereinstimmende Strukturelemente abgefragt werden soll, Fehler aufgrund von Formatunterschieden vermieden werden können.

Nach Ausführungsformen umfasst die Datenabfrage des ersten Datensatzes die ersten Abfrageregeln. Das erste Abfrageergebnis umfasst die ersten Datenwerte derjenigen ersten Strukturelemente, für welche die ersten Abfrageregeln eine Transformation von einem ersten Datenformat des ersten Registers in ein zweites Datenformat des zweiten Registers definieren, transformiert in dem zweiten Datenformat.

Ausführungsformen können den Vorteil haben, dass die Abfrageregeln dem ersten Register mitgeteilt werden und dieses somit in die Lage versetzt wird, die abgefragten Datenwerte im Abfrageergebnis im Datenformat des zweiten Registers anzugeben. Das zweite Register bzw. das zweite Registercomputersystem kann das Abfrageergebnis mithin entschlüsseln und die entschlüsselten Datenwerte direkt in dem bereitgestellten Datenformat für eine Abfrage des zweiten Registers verwenden.

Nach Ausführungsformen umfasst die erste Pseudonymabfrage die ersten Abfrageregeln, um dem zweiten Registercomputersystem Definitionen ein oder mehrere Transformationen für die ersten Datenwerte der ersten Strukturelemente von dem ersten Datenformat des ersten Registers in das zweite Datenformat des zweiten Registers bereitzustellen.

Ausführungsformen können den Vorteil haben, dass dem zweiten Register bzw. dem zweiten Registercomputersystem ein oder mehrere Transformationen bereitgestellt werden, welche das zweite Registercomputersystem dazu in die Lage versetzen aus dem ersten Register abgefragte Datenwerte, welche in dem ersten Datenformat bereitgestellt werden, für ein Abfragen des zweiten Registers in das zweite Datenformat des zweiten Registers zu transformieren.

Nach Ausführungsformen werden für jede paarweise Kombination der Register der Mehrzahl von Registern jeweils Abfrageregeln für diejenigen Strukturelemente bestimmt, welche Datensätzen der beiden Register der entsprechenden paarweise Kombination gemeinsam sind und in denen Datensätze in den entsprechenden beiden Registern in unterschiedlichen Formaten gespeichert sind. Die bestimmten Abfrageregeln definieren für die entsprechenden Strukturelemente jeweils eine Transformation von einem der unterschiedlichen Datenformate in das andere der unterschiedlichen Datenformate der beiden Register.

Ausführungsformen können den Vorteil haben, dass Fehler aufgrund von Formatunterschieden beim Abfragen der Register nach einem Vorkommen bestimmter Datenwerte vermieden werden können.

Nach Ausführungsformen umfasst das Verfahren ferner:
- Empfangen des ersten Pseudonyms des ersten Datensatzes des ersten Registers von dem ersten Registercomputersystem durch das Verknüpfungscomputersystem,
- Speichern des ersten Pseudonyms in dem Speicher des Verknüpfungscomputersystems.

Ausführungsformen können den Vorteil haben, dass das erste Pseudonym dem Verknüpfungscomputersystem zur Nutzung, etwa zum Erstellen von Pseudonymverknüpfungen, zur von dem ersten Registercomputersystem bereitgestellt wird und das Verknüpfungscomputersystem mithin nicht in dessen Erstellung involviert ist.

Nach Ausführungsformen umfasst das Verfahren ferner:
- Empfangen des öffentlichen kryptographischen Schlüssels des zweiten Registers von dem zweiten Registercomputersystem durch das Verknüpfungscomputersystem,
- Speichern des öffentlichen kryptographischen Schlüssels des zweiten Registers durch das Verknüpfungscomputersystem in dem Speicher des Verknüpfungscomputersystems.

Nach Ausführungsformen umfasst das Verfahren ferner:
- Empfangen des öffentlichen kryptographischen Schlüssels des ersten Registers von dem ersten Registercomputersystem durch das Verknüpfungscomputersystem,
- Speichern des öffentlichen kryptographischen Schlüssels des ersten Registers durch das Verknüpfungscomputersystem in dem Speicher des Verknüpfungscomputersystems.

Nach Ausführungsformen umfasst das Verfahren für jedes der Register der Mehrzahl von Registern jeweils:
- Empfangen eines öffentlichen kryptographischen Schlüssels des entsprechenden Registers von dem Registercomputersystem des entsprechenden Registers durch das Verknüpfungscomputersystem,
- Speichern des empfangenen öffentlichen kryptographischen Schlüssels des entsprechenden Registers durch das Verknüpfungscomputersystem in dem Speicher des Verknüpfungscomputersystems.

Ausführungsformen können den Vorteil haben, dass die öffentlichen kryptographischen Schlüssel dem Verknüpfungscomputersystem jeweils von dem Registercomputersystem zur Verfügung gestellt werden, welches über den zugehörigen privaten kryptographischen Schlüssel verfügt. Das Verknüpfungscomputersystem verwaltet die öffentlichen kryptographischen Schlüssel bzw. sendet diese an die anderen Registercomputersystemen zum Verschlüsseln von Datenwerten, welche jeweils für das Registercomputersystem mit dem privaten kryptographischen Schlüssel zum Entschlüsseln bestimmt sind. Somit findet kein direkter Austausch der öffentlichen kryptographischen Schlüssel zwischen den Registercomputersystemen statt.

Nach Ausführungsformen werden die asymmetrischen Schlüsselpaare beispielsweise jeweils von den einzelnen Registercomputersystemen erzeugt und die öffentlichen kryptographischen Schlüssel der Schlüsselpaare zur weiteren Verteilung an das Verknüpfungscomputersystem gesendet, während die privaten kryptographischen Schlüssel lokal auf den Registercomputersystemen zum Entschlüsseln von Datenübertragungen an die entsprechenden Registercomputersysteme gespeichert werden.

Nach Ausführungsformen bildet beispielsweise jedes der Registercomputersysteme jeweils ein asymmetrisches kryptographisches Schlüsselpaar für das Register, welches das entsprechende Registercomputersystem verwaltet. Die asymmetrischen Schlüsselpaare umfassen beispielsweise jeweils einen öffentlichen Schlüssel bzw. "Public Key" (PubK) und einen privaten Schlüssel "Private Key" (PrK). Das Verknüpfungscomputersystem empfängt von jedem der Registercomputersystemen jeweils den öffentlichen kryptographischen Schlüssel des entsprechenden Registers. Ferner kann das Verknüpfungscomputersystem die Datenstruktur (DS) des entsprechenden Registers von dem Registercomputersystem empfangen. Für jedes Registerpaar wird beispielsweise eine Schnittmenge aus den von den beiden jeweiligen Registern empfangen Datenstrukturen gebildet und gespeichert. Nach Ausführungsformen können diese Abfragen der öffentlichen Schlüssel und/oder Datenstrukturen der Register in Schleifen stattfinden, bis alle Kombinationen möglicher Registerpaare gespeichert sind.

Umfasst die Mehrzahl von Registern beispielsweise vier Register A, B, C, D, lassen sich daraus 3!, d.h. 6 Registerpaare bilden, da die Reihenfolge der Register innerhalb der Paarungen beispielsweise vernachlässigbar ist. Als Ergebnis erhält das Verknüpfungscomputersystem beispielsweise die Registerpaare (A;B), (A;C), (A;D), (B;C) (B;D), und (C;D). Für jedes dieser Registerpaare wird beispielsweise ein Paar von öffentlichen Schlüsseln der entsprechenden Register gespeichert. Ferner wird für jedes dieser Registerpaare beispielsweise eine Schnittmenge der Datenstrukturen der Register der entsprechenden Registerpaare gespeichert.

Nach Ausführungsformen fragt das Verknüpfungscomputersystem beispielsweise in einer ersten Schleife die Pseudonyme aller Datensätze des ersten Registers A ab. In einer nachfolgenden Schleife fragt das Verknüpfungscomputersystem beispielsweise zu jedem der Pseudonyme des ersten Registers A Datenwerte ab und lässt das Abfrageergebnis von dem ersten Register A bzw. dem das erste Register A verwaltenden ersten Registercomputersystem mit dem öffentlichen kryptographischen Schlüssel des zweiten Registers B verschlüsseln. Die Zusammenstellung der Abfrageergebnisse erfolgt beispielsweise nach Regeln für das zweite Register B, welche beispielsweise das Verknüpfungscomputersystem dem ersten Register A zu diesem Zweck bereitstellt. Das verschlüsselte Abfrageergebnis übergibt das Verknüpfungscomputersystem an das zweite Registercomputersystem, welches das zweite Register B verwaltete, das Abfrageergebnis des ersten Registers A entschlüsselt und für eine Abfrage des zweiten Registers B verwendet. Aus dem durch diese Abfrage des zweiten Registers B ermittelten zweiten Datensatz in dem zweiten Register B wird ein zweites Pseudonym gebildet bzw. ermittelt. Dieses zweite Pseudonym des zweiten Datensatzes des zweiten Registers B wird als Antwort an das Verknüpfungscomputersystem zurückgegeben. Das Verknüpfungscomputersystem speichert das zweite Pseudonym des zweiten Datensatzes aus dem zweiten Register B mit dem zugehörigen ersten Pseudonym des ersten Datensatzes aus dem ersten Register A und führt die Schleife über das nächste Pseudonym des nächsten Datensatzes des ersten Register A fort bis für jedes der Pseudonyme aus dem ersten Register A geprüft wurde, ob das zweite Register B einen mit dem von dem entsprechenden Pseudonym des ersten Registers A identifizierten Datensatz zu verknüpfenden Datensatz umfasst.

Wenn alle Pseudonymverknüpfungen für die Registerpaarung (A;B) gebildet wurden, setzt das Verknüpfungscomputersystem das Verfahren beispielsweise mit einer neuen Schleife über die Pseudonyme des ersten Registers A zum Ermitteln von Pseudonymverknüpfungen mit Pseudonymen eines dritten Registers C fort. Im Zuge der neuen Schleife fragt das Verknüpfungscomputersystem beispielsweise wiederum zu jedem der Pseudonyme des ersten Registers A Datenwerte ab und lässt das Abfrageergebnis von dem ersten Register A bzw. dem das erste Register A verwaltenden ersten Registercomputersystem mit dem öffentlichen kryptographischen Schlüssel des dritten Registers C verschlüsseln. Die Zusammenstellung der Abfrageergebnisse erfolgt beispielsweise nach Regeln für das dritte Register C, welche beispielsweise das Verknüpfungscomputersystem dem ersten Register A zu diesem Zweck bereitstellt. Das verschlüsselte Abfrageergebnis übergibt das Verknüpfungscomputersystem an ein drittes Registercomputersystem, welches das dritte Register C verwaltet, das Abfrageergebnis des ersten Registers A entschlüsselt und für eine Abfrage des dritten Registers C verwendet. Aus dem durch diese Abfrage des dritten Registers C ermittelten dritten Datensatz in dem dritten Register C wird ein drittes Pseudonym gebildet bzw. ermittelt. Dieses dritte Pseudonym des dritten Datensatzes des dritten Registers C wird als Antwort an das Verknüpfungscomputersystem zurückgegeben. Das Verknüpfungscomputersystem speichert das dritte Pseudonym des dritten Datensatzes aus dem dritten Register C mit dem zugehörigen ersten Pseudonym des ersten Datensatzes aus dem ersten Register A und führt die Schleife über das nächste Pseudonym des nächsten Datensatzes des ersten Register A fort bis für jedes der Pseudonyme aus dem ersten Register A geprüft wurde, ob das dritte Register C einen mit dem von dem entsprechenden Pseudonym des ersten Registers A identifizierten Datensatz zu verknüpfenden Datensatz umfasst. Anschließend, wenn alle Pseudonymverknüpfungen für die Registerpaarung (A;C) gebildet wurden, wird mit den weiteren Registern der Mehrzahl von Registern auf die gleiche Art verfahren, bis für alle Kombinationen der Register bzw. Registerpaarungen mögliche Pseudonymverknüpfungen geprüft und gegebenenfalls erstellt wurden.

Nach Ausführungsformen handelt es sich bei den Pseudonymen der Datensätze zumindest eines der Register der Mehrzahl der Register jeweils um einen Datenwert der entsprechenden Datensätze. Bei dem Pseudonym kann es sich beispielsweise um einen Identifikationscode, wie etwa eine Identifikationsnummer, des entsprechenden Datensatz handeln. Beispielsweise kann es sich im Falle eines Steuerregisters bei dem Pseudonym um eine Steueridentifikationsnummer handeln. Bei einem Identifikationscode eines Datensatzes handelt es sich beispielsweise um eine Folge von alphanummerischen Zeichen, welche den Datensatz eindeutig identifiziert. Der Identifikationscode umfasst keine weiteren Informationen, insbesondere lässt er keine Rückschlüsse auf die weiteren in dem entsprechenden Datensatz gespeicherten Datenwerte zu.

Ausführungsformen können den Vorteil haben, dass die Pseudonyme bereits durch die Datensätze selbst bereitgestellt werden, ohne dass diese zusätzlich berechnet werden müssen. Ferner können Pseudonyme in Form von Identifikationscodes der Datensätze innerhalb der Register den Vorteil haben, dass diese unverändert bleiben, selbst wenn datenwerte des entsprechenden Datensatzes geändert werden.

Nach Ausführungsformen handelt es sich bei den Pseudonymen der Datensätze zumindest eines der Register der Mehrzahl der Register jeweils um ein Ergebnis einer auf den entsprechenden Datensatz angewendete kryptographische Funktion, insbesondere eine kryptographische Einwegfunktion. Nach Ausführungsformen handelt es sich bei der kryptographischen Funktion um eine Verschlüsselung mit dem öffentlichen kryptographischen Schlüssel oder einem symmetrischen kryptographischen Schlüssel des entsprechenden Registers. Nach Ausführungsformen handelt es sich bei der kryptographischen Einwegfunktion um eine Einwegfunktion in Form einer Hashfunktion.

Ausführungsformen können den Vorteil haben, dass ein solches Pseudonym nicht nur den Datensatz eindeutig identifiziert, sondern auch den Inhalt des entsprechenden Datensatzes eindeutig identifiziert. Ändern sich die Datenwerte des Datensatzes, welche in die Berechnung des Pseudonyms eingehen, ändert sich auch das Pseudonym. Nach Ausführungsformen gehen alle Datenwerte eines Datensatzes in die Berechnung eines Pseudonyms ein. Nach Ausführungsformen gehen nur Datenwerte ausgewählter Strukturelemente des Datensatzes in die Berechnung eines Pseudonyms ein.

Nach Ausführungsformen umfasst das Verfahren ferner:
- Empfangen eines Änderungshinweises des ersten Datensatzes des ersten Registers von dem ersten Registercomputersystem durch das Verknüpfungscomputersystem, wobei der Änderungshinweis das erste Pseudonym des ersten Datensatzes und eine Angabe ein oder mehrerer von der Änderung betroffenen Strukturelemente des ersten Datensatzes umfasst,
- Bestimmen aller Pseudonymverknüpfungen des ersten Pseudonyms des ersten Datensatzes des ersten Registers mit weiteren Pseudonymen von weiteren Datensätzen weiterer Register der Mehrzahl von Registern, welche jeweils ein oder mehrere der von der Änderung betroffenen Strukturelemente umfassen,
für jede der bestimmten Pseudonymverknüpfungen jeweils:
- Senden einer Änderungsabfrage des ersten Datensatzes des ersten Registers durch das Verknüpfungscomputersystem an das erste Registercomputersystem, wobei die Änderungsabfrage geänderte Strukturelemente des ersten Datensatzes angibt, welche den Datensätzen des ersten und des entsprechenden weiteren Registers gemäß den Datenstrukturen der beiden Register gemeinsam sind,
- Empfangen einer Antwort auf die Änderungsabfrage von dem ersten Registercomputersystem durch das Verknüpfungscomputersystem mit einer Änderungsangabe, welche mit dem öffentlichen kryptographischen Schlüssel des entsprechenden weiteren Registers verschlüsselt ist und die Änderungen der Datenwerte der geänderten Strukturelemente angibt, welche den Datensätzen des ersten und des entsprechenden weiteren Registers gemäß den Datenstrukturen der beiden Register gemeinsam sind,
- Senden einer Änderungsaufforderung mit der verschlüsselten Änderungsangabe von dem Verknüpfungscomputersystem an ein das weitere Register verwaltendes weiteres Registercomputersystem, wobei die Änderungsaufforderung das weitere Pseudonym umfasst, mit welchem das erste Pseudonym gemäß der bestimmten Pseudonymverknüpfung verknüpft ist, und das weitere Registercomputersystem dazu auffordert, die in der verschlüsselten Änderungsangabe angegebenen Änderungen an dem durch das weitere Pseudonym identifizierten weiteren Datensatz des weiteren Registers vorzunehmen.

Ausführungsformen können den Vorteil haben, dass das Verknüpfungscomputersystem als Vermittlungsinstanz im Falle einer Änderung eines der Datensätze eines der Register unter Verwendung der Pseudonymverknüpfungen des Pseudonyms des geänderten Datensatzes bestimmen kann, in welchen Datensätzen der anderen Register analoge Änderungen vorzunehmen sind. Dem Verknüpfungscomputersystem wird beispielsweise nur mitgeteilt, welche Strukturelemente des ersten Registers und/oder des ersten Datensatzes geändert wurden. Anhand der Datenstrukturen der anderen Register kann das Verknüpfungscomputersystem beispielsweise bestimmen, welche Register ebenfalls eines der geänderten Strukturelemente umfasst. Falls das Pseudonym des geänderten Datensatzes mit einem Pseudonym eines Datensatzes aus einem dieser Register über eine Pseudonymverknüpfung verbunden ist, sind in dem entsprechenden Datensatz analoge Änderungen vorzunehmen. Diese Bestimmung der in analoger Weise zu ändernden Datensätze kann erfolgen, ohne dass das Verknüpfungscomputersystem Kenntnis von dem Inhalt der vorgenommenen Änderungen erhält. Das Verknüpfungscomputersystem verwendet hierfür lediglich die Pseudonymverknüpfungen und Datenstrukturen.

Wenn das Verknüpfungscomputersystem die weiteren zu ändernden Datensätze bestimmt hat, kann es als Vermittlungsinstanz eine Änderung der jeweiligen weiteren Datensätze initiieren. Die Änderungsangaben der vorzunehmenden Änderungen werden dabei von dem Verknüpfungscomputersystem in verschlüsselter Form weitergeleitet, sodass das Verknüpfungscomputersystem selbst keinen Einblick in den Inhalt der Änderungen erhält. Lediglich das als Empfänger der Änderungsangabe bestimmte Registercomputersystem ist mit seinem privaten kryptographischen Schlüssel dazu in der Lage die verschlüsselte Änderungsangabe zu entschlüsseln und die vorgesehenen Änderungen an dem durch das weitere Pseudonym identifizierten weiteren Datensatz vorzunehmen.

Nach Ausführungsformen umfasst die Änderungsabfrage des ersten Datensatzes zum Identifizieren des abzufragenden ersten Datensatzes das erste Pseudonym des ersten Datensatzes. Nach Ausführungsformen umfasst die Änderungsabfrage des ersten Datensatzes für jede der bestimmten Pseudonymverknüpfungen jeweils den öffentlichen kryptographischen Schlüssel des entsprechenden weiteren Registers.

Nach Ausführungsformen umfasst die Änderungsabfrage des ersten Datensatzes für jede der bestimmten Pseudonymverknüpfungen jeweils Abfrageregeln, welche ein oder mehrere Transformationen für ein oder mehrere der geänderten Strukturelemente des ersten Datensatzes definieren. Die Änderungsangabe gibt die Änderungen der Datenwerte derjenigen geänderten Strukturelemente, für welche die Abfrageregeln eine Transformation von einem Datenformat des ersten Registers in ein Datenformat des weiteren Registers definiert, transformiert in dem Datenformat des weiteren Registers an.

Ausführungsformen können den Vorteil haben, dass die Abfrageregeln dem ersten Register mitgeteilt werden und dieses somit in die Lage versetzt wird, die Änderungen der Datenwerte in der Änderungsangabe im Datenformat des weiteren Registers anzugeben. Das weitere Register bzw. das weitere Registercomputersystem kann die Änderungsangabe mithin entschlüsseln und die entschlüsselten Änderungen direkt in dem bereitgestellten Datenformat in dem weiteren Datensatz des weiteren Registers implementieren.

Nach Ausführungsformen umfasst die Änderungsaufforderung für jede der bestimmten Pseudonymverknüpfungen jeweils Abfrageregeln, welche ein oder mehrere Transformationen für ein oder mehrere der geänderten Strukturelemente des ersten Datensatzes definieren, um dem weiteren Registercomputersystem Definitionen der ein oder mehrere Transformationen der in der verschlüsselten Änderungsangabe angegebenen Änderungen von dem Datenformat des ersten Registers in das Datenformat des weiteren Registers bereitzustellen.

Ausführungsformen können den Vorteil haben, dass dem weiteren Register bzw. dem weiteren Registercomputersystem ein oder mehrere Transformationen bereitgestellt werden, welche das weitere Registercomputersystem dazu in die Lage versetzen Änderungen des ersten Datensatzes aus dem ersten Register, welche in dem ersten Datenformat bereitgestellt werden, für ein Implementieren als Änderungen in dem identifizierten weiteren Datensatz des weiteren Registers in das Datenformat des weiteren Registers zu transformieren. Ausführungsformen können den Vorteil haben, dass Fehler aufgrund von Formatunterschieden beim Ändern der Register vermieden werden können.

Nach Ausführungsformen umfasst das Verfahren ferner:
- Empfangen eines aus dem geänderten ersten Datensatz berechneten geänderten ersten Pseudonyms von dem ersten Registercomputersystem durch das Verknüpfungscomputersystem,
- Ersetzen des gespeicherten ersten Pseudonyms mit dem empfangenen geänderten ersten Pseudonym durch das Verknüpfungscomputersystem in dem Speicher des Verknüpfungscomputersystems.

Ausführungsformen können den Vorteil haben, dass Änderungen eines Pseudonyms, welche sich aus Änderungen von Datenwerten eines Datensatzes ergeben, berücksichtigt werden können. Solche Änderungen eines Pseudonyms infolge von Datensatzänderungen können sich beispielsweise im Fall einer Berechnung des Pseudonyms aus dem Datensatz unter Verwendung kryptographische Funktion, insbesondere eine kryptographische Einwegfunktion, ergeben.

Nach Ausführungsformen umfasst das Ersetzen des gespeicherten ersten Pseudonyms durch das empfangene geänderte erste Pseudonym ein Ersetzen des gespeicherten ersten Pseudonyms in jeder der für das gespeicherte erste Pseudonym gespeicherten Pseudonymverknüpfungen.

Nach Ausführungsformen umfasst das Verfahren ferner für jeden der Datensätze, welche gemäß den bestimmten Pseudonymverknüpfungen mit dem geänderten ersten Datensatz verknüpft sind:
- Empfangen einer Antwort auf die Änderungsaufforderung von dem weiteren Registercomputersystem durch das Verknüpfungscomputersystem, wobei die Antwort auf die Änderungsaufforderung ein aus dem gemäß der Änderungsaufforderung geänderten weiteren Datensatz des weiteren Registers berechnetes geändertes weiteres Pseudonym umfasst,
- Ersetzen des für den entsprechenden weiteren Datensatz gespeicherten weiteren Pseudonyms mit dem entsprechenden empfangenen geänderten Pseudonym durch das Verknüpfungscomputersystem in dem Speicher des Verknüpfungscomputersystems.

Ausführungsformen können den Vorteil haben, dass Änderungen eines Pseudonyms, welche sich aus Änderungen von Datenwerten eines Datensatzes ergeben, berücksichtigt werden können.

Nach Ausführungsformen umfasst das Ersetzen der für die weiteren Datensätze gespeicherten weiteren Pseudonyme mit den empfangenen geänderten Pseudonymen jeweils ein Ersetzen des entsprechenden gespeicherten weiteren Pseudonyms in jeder der für das entsprechende gespeicherte weitere Pseudonym gespeicherten Pseudonymverknüpfungen.

Ausführungsformen umfassen ein Verknüpfungscomputersystem zum Erstellen von Pseudonymverknüpfungen zwischen Datensätzen einer Mehrzahl von Registern. Das Verknüpfungscomputersystem umfasst einen Prozessor und einen Speicher mit Programminstruktionen.

Die Mehrzahl von Registern umfasst zumindest ein erstes und ein zweites Register, wobei jedes der Register jeweils eine Mehrzahl von Datensätzen, denen jeweils ein datensatzspezifisches Pseudonym zugeordnet ist und die jeweils eine registerspezifischen Datenstruktur aufweisen. Die registerspezifischen Datenstrukturen legen jeweils fest, welche Strukturelemente die Datensätze des jeweiligen Registers umfassen. Jedes der Register wird jeweils von einem Registercomputersystem verwaltet.

Ein Ausführen der Programminstruktionen durch den Prozessor veranlasst das Verknüpfungscomputersystem dazu ein Verfahren auszuführen, welches umfasst:
- Senden einer Datenabfrage eines ersten Datensatzes des ersten Registers von dem Verknüpfungscomputersystem an ein das erste Register verwaltendes erstes Registercomputersystem, wobei die Datenabfrage zum Erstellen einer ersten Pseudonymverknüpfung zwischen dem ersten Datensatz und einem Datensatz des zweiten Registers Datenwerte abfragt, die in dem ersten Datensatz für ein oder mehreren ersten Strukturelementen gespeichert sind, welche den Datensätzen des ersten und des zweiten Registers gemäß den Datenstrukturen der beiden Register gemeinsam sind,
- Empfangen einer Antwort auf die erste Datenabfrage von dem ersten Registercomputersystem durch das Verknüpfungscomputersystem mit einem ersten Abfrageergebnis, welches die in dem ersten Datensatz gespeicherten Datenwerte der ersten Strukturelemente umfasst und mit einem öffentlichen kryptographischen Schlüssel des zweiten Registers verschlüsselt ist,
- Senden einer ersten Pseudonymabfrage mit dem verschlüsselten ersten Abfrageergebnis von dem Verknüpfungscomputersystem an ein das zweite Register verwaltendes zweites Registercomputersystem,
- falls das zweite Register einen zweiten Datensatz umfasst, in welchem für Strukturelemente, die mit den ersten Strukturelementen übereinstimmen, Datenwerte gespeichert sind, die mit den Datenwerten der ersten Strukturelemente übereinstimmen, Empfangen einer Antwort auf die erste Pseudonymabfrage von dem zweiten Registercomputersystem durch das Verknüpfungscomputersystem mit einem zweiten Pseudonym des zweiten Datensatzes,
- Speichern der ersten Pseudonymverknüpfung zwischen einem ersten Pseudonym des ersten Datensatzes und dem empfangenen zweiten Pseudonym des zweiten Datensatzes durch das Verknüpfungscomputersystem in einem Speicher des Verknüpfungscomputersystems.

Nach Ausführungsformen ist das Verknüpfungscomputersystem dazu konfiguriert jede der zuvor beschrieben Ausführungsformen des Verfahrens zum Erstellen von Pseudonymverknüpfungen zwischen Datensätzen einer Mehrzahl von Registern auszuführen.

Ausführungsformen umfassen ein System, welches ein Verknüpfungscomputersystem nach einer der zuvor beschriebenen Ausführungsformen umfasst sowie ein oder mehrere Registercomputersysteme, welche jeweils eines der Register der Mehrzahl von Register verwalten.

Nach Ausführungsformen ist das System dazu konfiguriert jede der zuvor beschrieben Ausführungsformen des Verfahrens zum Erstellen von Pseudonymverknüpfungen zwischen Datensätzen einer Mehrzahl von Registern auszuführen.

Nach Ausführungsformen umfasst das System für jedes der Register der Mehrzahl von Registern jeweils ein Registercomputersystem, welches das entsprechende Register der Mehrzahl von Registern verwaltet.

Im Weiteren werden Ausführungsformen der Erfindung mit Bezugnahme auf die Zeichnungen näher erläutert. Es zeigen:
- Figur 1: ein schematisches Blockdiagramm einer Ausführungsform eines exemplarischen Systems zum Erstellen von Pseudonymverknüpfungen zwischen Datensätzen,
- Figur 2: ein schematisches Flussdiagramm einer Ausführungsform eines exemplarischen Verfahrens zum Ermitteln öffentlicher kryptographischer Schlüssel und Datenstrukturen,
- Figur 3: ein schematisches Flussdiagramm einer Ausführungsform eines exemplarischen Verfahrens zum Erstellen einer Pseudonymverknüpfung zwischen Datensätzen,
- Figur 4: ein schematisches Flussdiagramm einer Ausführungsform eines exemplarischen Verfahrens zum Erstellen einer Pseudonymverknüpfung zwischen Datensätzen und
- Figur 5: ein schematisches Flussdiagramm einer Ausführungsform eines exemplarischen Verfahrens zum Ändern eines Datensatzes.

Elemente der nachfolgenden Ausführungsformen, die einander entsprechen, werden mit denselben Bezugszeichen gekennzeichnet.

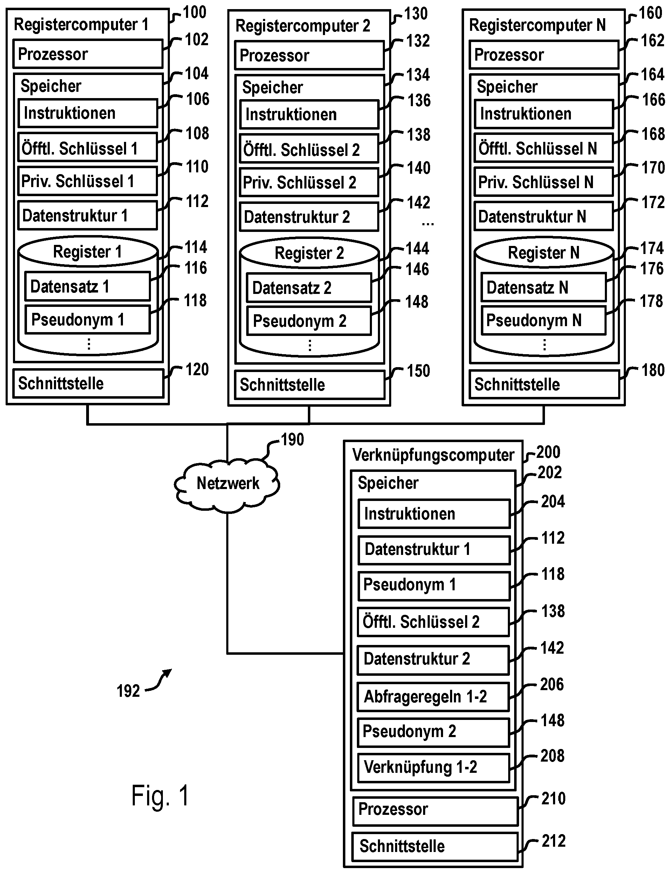

Figur 1 zeigt ein exemplarisches System 192 zum Erstellen von Pseudonymverknüpfungen 208 zwischen Datensätzen 116, 146, 176. Es wird eine Mehrzahl von Registern 114, 144, 174 bereitgestellt, welche jeweils von einem Registercomputersystem 100, 130, 160 verwaltet werden. Die einzelnen Registercomputersysteme 100, 130, 160 umfassen jeweils einen Prozessor 102, 132, 162, welcher dazu konfiguriert ist, Programminstruktionen 106, 136, 166 auszuführen. Die Registercomputersysteme 100, 130, 160 umfassen ferner jeweils einen Speicher 104, 134, 164, in welchem neben den Registern 114, 144, 174, jeweils eine Datenstruktur 112, 142, 172 gespeichert ist, welche die Struktur der Datensätze 11, 146, 176 in dem jeweiligen Register 114, 144, 174 definiert. Ferner umfassen die Speicher 104, 134, 164, jeweils ein asymmetrisches Schlüsselpaar mit einem öffentlichen kryptographischen Schlüssel 108, 138, 168 und einem zugehörigen privaten kryptographischen Schlüssel 110, 140, 170. Die privaten kryptographischen Schlüssel 110, 140, 170 sind beispielsweise jeweils in einem geschützten Speicherbereich der Speicher 104, 134, 164 gespeichert. In den Registern 114, 144, 174 ist jeweils eine Mehrzahl von Datensätze 116, 146, 176 gespeichert, denen jeweils ein den entsprechenden Datensatz 116, 146, 176 eindeutig definierendes Pseudonym zugeordnet ist. Die jeweilige Struktur der Datensätze 116, 146, 176, d.h. die von diesem umfassten Strukturelemente und/oder zur Speicherung verwendeten Datenformate, werden von den jeweiligen Datenstrukturen 112, 142, 172 definiert. Schließlich umfassen die Registercomputersysteme 100, 130, 160 jeweils eine Kommunikationsschnittstelle zur Kommunikation mit dem Verknüpfungscomputersystem 200 über das Netzwerk 190. Nach Ausführungsformen erfolgt eine Kommunikation der Registercomputersysteme 100, 130, 160 miteinander nur über das Verknüpfungscomputersystem 200 als Vermittlungsinstanz, nicht direkt.

Das Verknüpfungscomputersystem 200 umfasst einen Prozessor 210, welcher dazu konfiguriert ist Programminstruktionen 204 auszuführen. Ein Ausführen der Programminstruktionen 204 durch den Prozessor 210 veranlasst das Verknüpfungscomputersystem 200 beispielsweise dazu ein Verfahren zum Erstellen von Pseudonymverknüpfungen 208 zwischen Datensätzen 112, 146, 176 der Mehrzahl von Registern 114, 144, 174 auszuführen. Ferner umfasst das Verknüpfungscomputersystem 200 eine Kommunikationsschnittstelle 212 zur Kommunikation mit den Registercomputersysteme 100, 130, 160 über das Netzwerk 190.

Im Zuge des Verfahrens zum Erstellen von Pseudonymverknüpfungen fragt das Verknüpfungscomputersystem 200 beispielsweise die Datenstrukturen 112, 142, 172 der Register 114, 144, 174 sowie die öffentlichen Schlüssel 118, 138, 168 der Register 114, 144, 174 ab und speichert diese in dem Speicher 202. Unter Verwendung der Datenstrukturen 112, 142 kann das Verknüpfungscomputersystem 200 beispielsweise eine Schnittmenge zwischen den Strukturelementen des Datensatzes 116 des ersten Registers 114 und Datensätzen des zweiten Registers 144 bestimmen. Unter Verwendung der Datenstrukturen 112, 142 kann das Verknüpfungscomputersystem 200 ferner beispielsweise Abfrageregeln 206 für die Register 114, 144 bestimmen. Die Abfrageregeln 206 definieren Transformationen von zwischen den Datenformaten der Register 114, 144. Das Verknüpfungscomputersystem 200 kann beispielsweise die Datenwerte der Strukturelemente des Datensatzes 116 abfragen, welche dieser mit den Datensätzen des zweiten Registers 144 gemeinsam hat. Diese abgefragten Datenwerte werden dem Verknüpfungscomputersystem 200 in verschlüsselter Form von dem ersten Registercomputersystem 100 übermittelt. Dabei sind die Datenwerte mit dem öffentlichen kryptographischen Schlüssel 138 des Registers 144 verschlüsselt, sodass nur das Registercomputersystem 130 mit dem zugehörigen privaten kryptographischen Schlüssel 140 die verschlüsselten Datenwerte entschlüsseln kann. Der entsprechende öffentlichen kryptographischen Schlüssel 138 zum Verschlüsseln wird dem Registercomputersystem 100 beispielsweise von dem Verknüpfungscomputersystem 200 zur Verfügung gestellt. Das Verknüpfungscomputersystem 200 leitet die verschlüsselten Datenwerte an das Registercomputersystem 130 weiter, welches sie entschlüsselt und prüft, ob in dem Register 144 ein Datensatz mit übereinstimmenden Datenwerten gespeichert ist. Gegebenenfalls werden für die Prüfung die Abfrageregeln 206 herangezogen, um Fehler aufgrund von datenformatunterschieden zu vermeiden. Falls beispielsweise der Datensatz 146 übereinstimmende Datenwerte umfasst, sendet das Registercomputersystem 130 dem Verknüpfungscomputersystem 200 das Pseudonym 148 des Datensatzes 146 als Antwort zu. Das Verknüpfungscomputersystem 200 erstellt dann eine Pseudonymverknüpfung 208 zwischen dem Pseudonym 118 des Datensatzes 116, welchen das Registercomputersystem 100 beispielsweise bereits zuvor mit den verschlüsselten Datenwerten in unverschlüsselter Form an das Verknüpfungscomputersystem 200 gesendet hat, und dem Pseudonym 148 des Datensatzes 146. Die Pseudonymverknüpfung 208 wird beispielsweise zur weiteren Verwendung durch das Verknüpfungscomputersystem 200 in dem Speicher 202 des Verknüpfungscomputersystems 200 gespeichert.

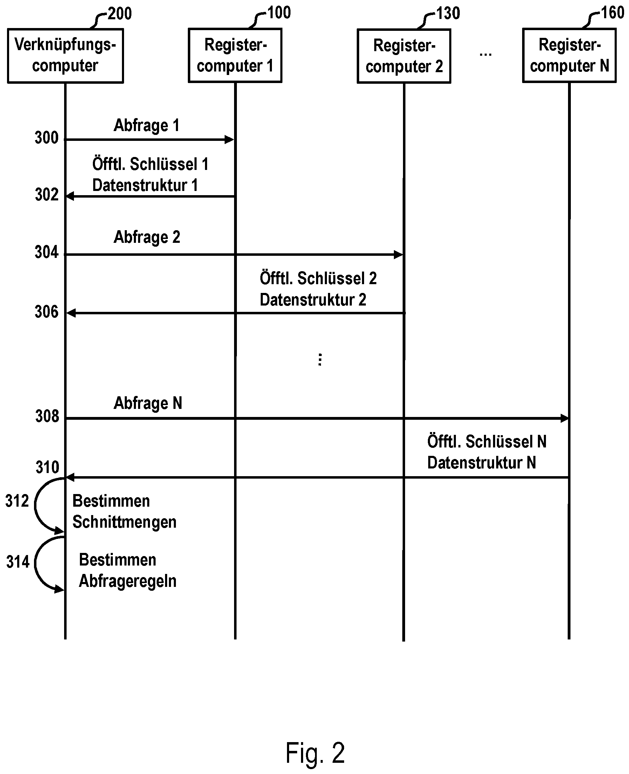

Figur 2 zeigt ein schematisches Flussdiagramm einer Ausführungsform eines exemplarischen Verfahrens zum Ermitteln öffentlicher kryptographischer Schlüssel und Datenstrukturen einer Mehrzahl von Registern durch ein Verknüpfungscomputersystem 200. Die Register der Mehrzahl von Registern werden jeweils durch ein Registercomputersystem 100, 130, 160 verwaltet. Das Verknüpfungscomputersystem 200 fragt beispielsweise der Reihe nach öffentliche kryptographische Schlüssel und Datenstrukturen der Register ab. In Schritt 300 sendet das Verknüpfungscomputersystem 200 eine erste Abfrage an ein erstes Registercomputersystem 100, welches ein erstes Register der Mehrzahl von Registern verwaltet. In Schritt 302 empfängt das Verknüpfungscomputersystem 200 in Antwort auf die in Schritt 300 gesendete erste Abfrage einen ersten öffentlichen kryptographischen Schlüssel des ersten Registers sowie eine erste Datenstruktur, welche die Strukturelemente definiert in welche die Datensätze des ersten Registers strukturiert sind. Der empfangenen erste öffentliche kryptographische Schlüssel und die erste Datenstruktur werden beispielsweise in einem Speicher des Verknüpfungscomputersystems 200 gespeichert. In Schritt 304 sendet das Verknüpfungscomputersystem 200 eine zweite Abfrage an ein zweites Registercomputersystem 130, welches ein zweites Register der Mehrzahl von Registern verwaltet. In Schritt 306 empfängt das Verknüpfungscomputersystem 200 in Antwort auf die in Schritt 300 gesendete zweite Abfrage einen zweiten öffentlichen kryptographischen Schlüssel des zweiten Registers sowie eine zweite Datenstruktur, welche die Strukturelemente definiert in welche die Datensätze des zweiten Registers strukturiert sind. Der empfangenen zweite öffentliche kryptographische Schlüssel und die zweite Datenstruktur werden beispielsweise in einem Speicher des Verknüpfungscomputersystems 200 gespeichert. Diese Abfragen werden der Reihe nach für alle Register der Mehrzahl von Registern wiederholt, bis ein letztes Register der Mehrzahl von Registern an der Reihe ist, d.h. ein N-tes Register von N Registern. In Schritt 308 sendet das Verknüpfungscomputersystem 200 eine N-te Abfrage an ein N-tes Registercomputersystem 100, welches ein N-tes Register der Mehrzahl von Registern verwaltet. In Schritt 310 empfängt das Verknüpfungscomputersystem 200 in Antwort auf die in Schritt 300 gesendete N-te Abfrage einen N-ten öffentlichen kryptographischen Schlüssel des N-ten Registers sowie eine N-te Datenstruktur, welche die Strukturelemente definiert in welche die Datensätze des N-ten Registers strukturiert sind. Der empfangenen N-te öffentliche kryptographische Schlüssel und die N-te Datenstruktur werden beispielsweise in einem Speicher des Verknüpfungscomputersystems 200 gespeichert. In Schritt 312 bestimmt das Verknüpfungscomputersystem 200 für jedes Registerpaar jeweils eine Schnittmenge zwischen den Datenstrukturen der beiden Register, die das entsprechende Paar bilden. Die Schnittmenge umfasst alle Strukturelemente, welche den beiden Datenstrukturen gemeinsam sind. Im Falle von N Registern sind dies (N-1)! Registerpaare. Falls die Register beispielsweise in Form von relationalen Datenbanken implementiert sind, umfasst die Schnittmenge die Attribute, welche den Relationen der entsprechenden beiden Register gemeinsam sind. In Schritt 314 bestimmt Verknüpfungscomputersystem 200 zusätzlich beispielsweise Abfrageregeln für die Registerpaare. Die Abfrageregeln definieren im Falle von Datenformat unterschieden zwischen Strukturelementen der beiden Register, welche für die gemeinsamen Strukturelemente gelten, Transformationen zwischen den Datenformaten. Diese Transformationen erlauben es Datenwerte in einem ersten Datenformat eines ersten der beiden Register abzufragen und das Ergebnis der Abfrage von dem ersten Datenformt auf ein zweites Datenformt eines zweiten der beiden Register abzubilden, sodass unter Verwendung des zweiten Datenformats das zweite Register darauf geprüft werden kann, ob es mit dem ersten Register übereinstimmende Datenwerte umfasst.

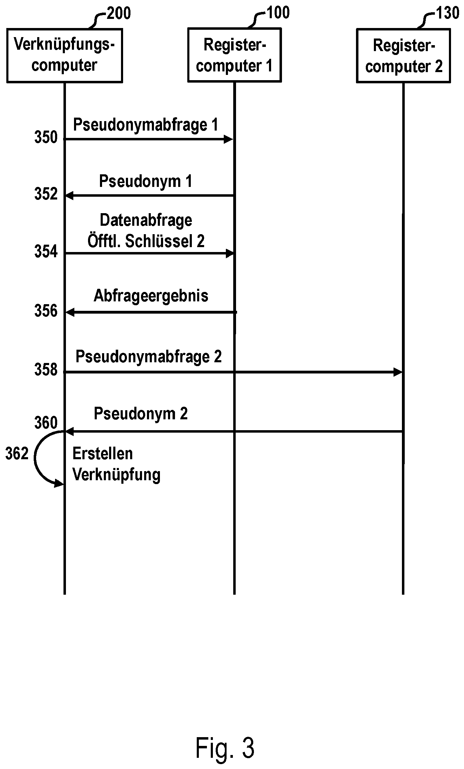

Figur 3 zeigt ein Flussdiagramm einer Ausführungsform eines exemplarischen Verfahrens zum Erstellen einer Pseudonymverknüpfung zwischen Datensätzen. In Schritt 350 sendet das Verknüpfungscomputersystem 200 eine erste Pseudonymabfrage an ein erstes Registercomputersystem 100, welches ein erstes Register der Mehrzahl von Registern verwaltet. In Schritt 352 empfängt das Verknüpfungscomputersystem 200 in Antwort auf die erste Pseudonymabfrage ein erstes Pseudonym eines ersten in dem ersten Register gespeicherten Datensatzes. Beispielsweise fragt das Verknüpfungscomputersystem zunächst alle Pseudonyme aller Datensätze des ersten Registers ab. In Schritt 354 sendet das Verknüpfungscomputersystem 200 eine Datenabfrage an das erste Registercomputersystem 100. Dies Datenabfrage umfasst beispielsweise das in Schritt 352 empfangene erste Pseudonym, um den abzufragenden ersten Datensatz zu identifizieren. Ferner gibt die Datenabfrage ein oder mehrere erste Strukturelemente an, welche den Datensätzen des ersten Registers und den Datensätzen eines zweiten Registers gemeinsam sind. Schließlich umfasst die Datenabfrage beispielsweise einen öffentlichen kryptographischen Schlüssel des zweiten Registers. In Schritt 356 empfängt das Verknüpfungscomputersystem 200 das Abfrageergebnis der Abfrage des ersten Datensatzes von dem ersten Registercomputersystem 100 in verschlüsselter Form. Dabei ist das Abfrageergebnis mit dem öffentlichen kryptographischen Schlüssel des zweiten Registers verschlüsselt, sodass nur dieses zweite Register bzw. ein das zweite Register verwaltendes zweites Registercomputersystem 130, welches Zugriff auf den zugehörigen privaten Schlüssel hat, das Abfrageergebnis entschlüsseln und Zugriff auf die abgefragten Datenwerte erhalten kann.

Nach alternativen Ausführungsformen fragt das Verknüpfungscomputersystem 200 nicht explizit die Pseudonyme der Datensätze des ersten Registers ab, sondern sendet vielmehr direkt eine Datenabfrage in Schritt 354 an das erste Registercomputersystem 100, ohne einen bestimmten Datensatz des ersten Registers zu identifizieren, von welchem die Datenwerte der ersten Strukturelemente abgefragt werden sollen. Das Registercomputersystem 100 wählt in diesem den Datensatz aus, von welchem die Datenwerte der ersten Strukturelemente abgefragt werden. Beispielsweise geht das Registercomputersystem 100 die in dem ersten Register gespeicherten Datensätze der Reihe nach durch, um dem Verknüpfungscomputersystem 200 beispielsweise sukzessive Abfrageergebnisse für alle Datensätze des ersten Registers bereitzustellen. Beispielsweise wird von dem ersten Registercomputersystem zusammen mit dem jeweiligen verschlüsselten Abfrageergebnis das Pseudonym des Datensatzes, aus dessen Abfrage das entsprechende Abfrageergebnis resultiert, an das Verknüpfungscomputersystem 200 gesendet.

In Schritt 358 sendet das Verknüpfungscomputersystem 200 eine zweite Pseudonymabfrage verschlüsselten Abfrageergebnis an das zweite Registercomputersystem 130. Das zweite Registercomputersystem 130 entschlüsselt das Abfrageergebnis mit seinem privaten kryptographischen Schlüssel und führt eine Abfrage des zweiten Registers unter Verwendung es entschlüsselten Abfrageergebnisses aus. Beispielsweise ist das Abfrageergebnis bereits als eine von dem zweiten Registercomputersystem 130 ausführbare Abfrage nach Datenwerten formuliert, welche für übereinstimmende Strukturelemente mit den Datenwerten des zuvor abgefragten Datensatzes des ersten Registers übereinstimmen. Beispielsweise umfasst das Abfrageergebnis einfach eine Auflistung der zuvor abgefragten Strukturelemente zusammen mit den jeweiligen Datenwerten, welche in dem Datensatz des ersten Registers für die entsprechenden Strukturelementen gespeichert waren. Haben das erste und das zweite Register beispielsweise die Strukturelemente "Nachname", "Vorname", "Stadt", "Postleitzahl", "Straße" und "Hausnummer" gemeinsam, umfasst das Abfrageergebnis beispielsweise die Datenwerte "AAA" für das Strukturelement "Nachname", "BBB" für das Strukturelement "Vorname", "CCC" für das Strukturelement "Stadt", "123" für das Strukturelement "Postleitzahl", "DDD" für das Strukturelement "Straße" und "45" für das Strukturelement "Hausnummer" aus dem zuvor abgefragten Datensatz des ersten Registers. Das zweiten Registercomputersystem 130 überprüft nun, ob das zweite Register einen Datensatz umfasst, in welchem für übereinstimmende Strukturelemente, d.h. "Nachname", "Vorname", "Stadt", "Postleitzahl", "Straße" und "Hausnummer", übereinstimmende Datenwerte gespeichert sind, d.h. "AAA", "BBB", "CCC", "123", "DDD" und "45". Umfasst das zweite Register einen solchen Datensatz, sendet das zweite Registercomputersystem 130 in Schritt 360 das Pseudonym des entsprechenden Datensatzes als Antwort auf die Pseudonymabfrage in Schritt 358 an das Verknüpfungscomputersystem 200. In Schritt 362 erstellt und speichert das Verknüpfungscomputersystem 200 eine Pseudonymverknüpfung zwischen dem Pseudonym des Datensatzes des ersten Registers und dem Pseudonym des Datensatzes des zweiten Registers.

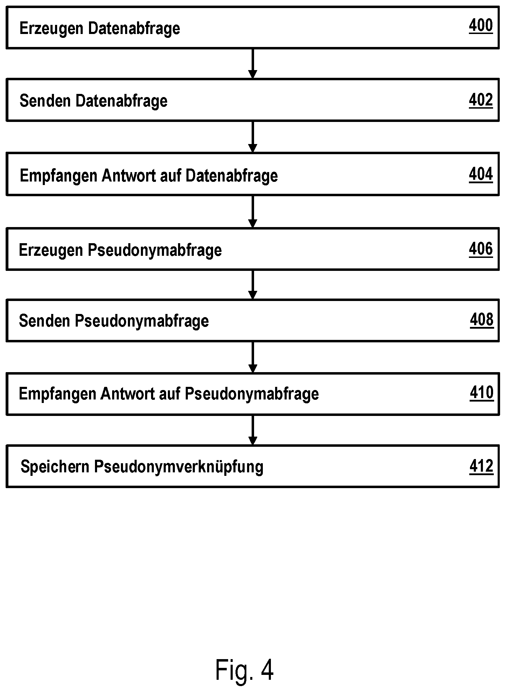

Figur 4 zeigt ein Flussdiagramm einer Ausführungsform eines exemplarischen Verfahrens zum Erstellen einer Pseudonymverknüpfung zwischen Datensätzen. In Schritt 400 erzeugt das Verknüpfungscomputersystem eine Datenabfrage eines ersten Datensatzes des ersten Registers. Diese Datenabfrage dient zum Erstellen einer ersten Pseudonymverknüpfung zwischen dem ersten Datensatz und einem Datensatz des zweiten Registers. Zu diesem Zweck werden Datenwerte abgefragt, die in dem ersten Datensatz für ein oder mehreren ersten Strukturelementen gespeichert sind. Diese ersten Strukturelemente sind den Datensätzen des ersten und des zweiten Registers gemäß den Datenstrukturen der beiden Register gemeinsam. Beispielsweise umfasst die Datenabfrage zusätzlichen einen öffentlichen kryptographischen Schlüssel des zweiten Registers. In Schritt 402 sendet das Verknüpfungscomputersystem die Datenabfrage an ein das erste Register verwaltendes erstes Registercomputersystem. In Schritt 404 empfängt das das Verknüpfungscomputersystem eine Antwort auf die Datenabfrage von dem ersten Registercomputersystem mit einem Abfrageergebnis, welches die in dem ersten Datensatz gespeicherten Datenwerte der ersten Strukturelemente umfasst und mit dem öffentlichen kryptographischen Schlüssel des zweiten Registers verschlüsselt ist. In Schritt 406 erzeugt das Verknüpfungscomputersystem eine Pseudonymabfrage mit dem verschlüsselten ersten Abfrageergebnis für das zweite Register. In Schritt 408 sendet das Verknüpfungscomputersystem die Pseudonymabfrage an ein das zweite Register verwaltendes zweites Registercomputersystem. In Schritt 410 empfängt das Verknüpfungscomputersystem von dem zweiten Registercomputersystem eine Antwort auf die erste Pseudonymabfrage unter der Voraussetzung, dass das zweite Register einen zweiten Datensatz umfasst, in welchem für Strukturelemente, die mit den ersten Strukturelementen übereinstimmen, Datenwerte gespeichert sind, die mit den Datenwerten der ersten Strukturelemente übereinstimmen. Die Antwort umfasst ein zweites Pseudonym des zweiten Datensatzes. In Schritt 412 erstellt das Verknüpfungscomputersystem eine Pseudonymverknüpfung zwischen einem ersten Pseudonym des ersten Datensatzes und dem empfangenen zweiten Pseudonym des zweiten Datensatzes und speichert diese Pseudonymverknüpfung zwischen.

Die vorgenannten Verfahrensschritte werden beispielsweise in Form von Schleifen für sämtliche Datensätze sämtlicher Register einer gegebenen Mehrzahl von Registern durch geführt, um alle möglichen Pseudonymverknüpfungen zwischen Datensätzen unterschiedlicher Register zu ermitteln. Im Falle von beispielsweise N Registern, wobei N eine natürliche Zahl größer zwei ist, wird beginnend mit dem ersten Register jedes der Register bis zum (N-1)-ten Register der Reihe nach darauf geprüft, ob für einen der Datensätze das entsprechende n-te Register, wobei n eine natürliche Zahl von 1 bis N-1 ist, eines der Register n+1 bis N, welchen ein oder mehrere Strukturelemente mit dem n-ten Register gemeinsam sind, einen Datensatz umfasst, in welchem für die ein oder mehrere gemeinsamen Strukturelemente übereinstimmende Datenwerte gespeichert sind.

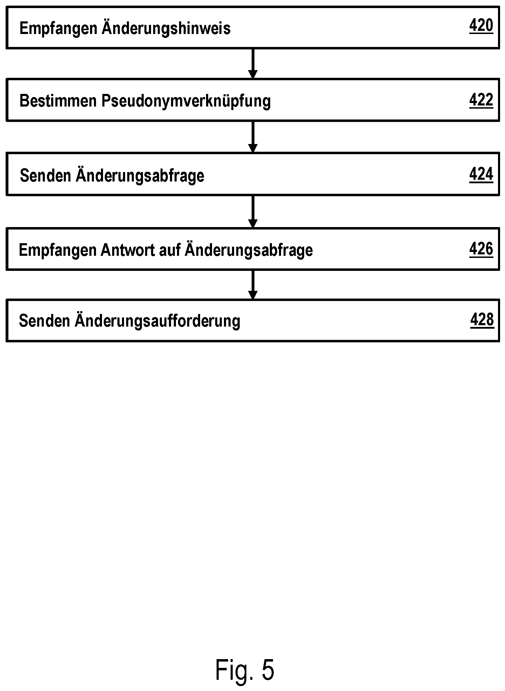

Figur 5 zeigt ein schematisches Flussdiagramm einer Ausführungsform eines exemplarischen Verfahrens zum Ändern eines Datensatzes. In Schritt 420 empfängt das Verknüpfungscomputersystem einen Änderungshinweises eines Datensatzes des ersten Registers von dem ersten Registercomputersystem. Der Änderungshinweis umfasst das Pseudonym des entsprechenden Datensatzes und eine Angabe ein oder mehrerer von der Änderung betroffenen Strukturelemente des entsprechenden Datensatzes. In Schritt 422 bestimmt das Verknüpfungscomputersystem alle Pseudonymverknüpfungen des entsprechenden Pseudonyms mit weiteren Pseudonymen von weiteren Datensätzen eines weiteren Registers der Mehrzahl von Registern, welche jeweils ein oder mehrere der von der Änderung betroffenen Strukturelemente umfassen. Die folgenden Schritte werden dann jeweils für jede der bestimmten Pseudonymverknüpfungen ausgeführt: In Schritt 424 sendet das Verknüpfungscomputersystem in Antwort auf den Änderungshinweis eine Änderungsabfrage des geänderten Datensatzes an das erste Registercomputersystem. Die Änderungsabfrage gibt geänderte Strukturelemente des geänderten Datensatzes an, welche den Datensätzen des ersten und des entsprechenden weiteren Registers gemäß den Datenstrukturen der beiden Register gemeinsam sind. Ferner umfasst die Änderungsabfrage beispielsweise einen öffentlichen kryptographischen Schlüssel des entsprechenden weiteren Registers. In Schritt 426 empfängt das Verknüpfungscomputersystem von dem ersten Registercomputersystem eine Antwort auf die Änderungsabfrage mit einer Änderungsangabe, welche mit dem öffentlichen kryptographischen Schlüssel des entsprechenden weiteren Registers verschlüsselt ist und die Änderungen der Datenwerte der geänderten Strukturelemente angibt, welche den Datensätzen des ersten und des entsprechenden weiteren Registers gemäß den Datenstrukturen der beiden Register gemeinsam sind. In Schritt 428 sendet das Verknüpfungscomputersystem eine Änderungsaufforderung mit der verschlüsselten Änderungsangabe an ein das weitere Register verwaltendes weiteres Registercomputersystem. Die Änderungsaufforderung umfasst das weitere Pseudonym, mit welchem das erste Pseudonym gemäß der bestimmten Pseudonymverknüpfung verknüpft ist, und fordert das weitere Registercomputersystem dazu auf, die in der verschlüsselten Änderungsangabe angegebenen Änderungen an dem durch das weitere Pseudonym identifizierten weiteren Datensatz des weiteren Registers vorzunehmen.

Sollte sich aufgrund der Änderung des entsprechenden Datensatzes des ersten Registers das Pseudonym des entsprechenden Datensatzes ändern, da dieses beispielsweise unter Verwendung der geänderten Datenwerte des entsprechenden Datensatzes berechnet wird, umfasst das Verfahren beispielsweise zusätzlich:
Ein Empfangen eines aus dem geänderten Datensatz berechneten geänderten Pseudonyms von dem ersten Registercomputersystem durch das Verknüpfungscomputersystem, ein Ersetzen des entsprechenden Pseudonyms in dem Speicher mit dem empfangenen geänderten ersten Pseudonym durch das Verknüpfungscomputersystem, ein Empfangen einer Antwort auf die Änderungsaufforderung von dem weiteren Registercomputersystem durch das Verknüpfungscomputersystem, wobei die Antwort auf die Änderungsaufforderung ein aus dem gemäß der Änderungsaufforderung geänderten weiteren Datensatz des weiteren Registers berechnetes geändertes weiteres Pseudonym umfasst, sowie ein Ersetzen des für den entsprechenden weiteren Datensatz in dem Speicher gespeicherten weiteren Pseudonyms mit dem entsprechenden empfangenen geänderten Pseudonym durch das Verknüpfungscomputersystem des Verknüpfungscomputersystems.

### Bezugszeichenliste

- 100: Registercomputersystem
- 102: Prozessor
- 104: Speicher
- 106: Programminstruktionen
- 108: öffentlicher Schlüssel
- 110: privater Schlüssel
- 112: Datenstruktur
- 114: Register
- 116: Datensatz
- 118: Pseudonym
- 120: Kommunikationsschnittstelle
- 130: Registercomputersystem
- 132: Prozessor
- 134: Speicher
- 136: Programminstruktionen
- 138: öffentlicher Schlüssel
- 140: privater Schlüssel
- 142: Datenstruktur
- 144: Register
- 146: Datensatz
- 148: Pseudonym
- 150: Kommunikationsschnittstelle
- 160: Registercomputersystem
- 162: Prozessor
- 164: Speicher
- 166: Programminstruktionen
- 168: öffentlicher Schlüssel
- 170: privater Schlüssel
- 172: Datenstruktur
- 174: Register
- 176: Datensatz
- 178: Pseudonym
- 180: Kommunikationsschnittstelle
- 190: Netzwerk
- 192: System
- 200: Verknüpfungscomputersystem
- 202: Speicher
- 204: Programminstruktionen
- 206: Abfrageregeln
- 208: Pseudonymverknüpfung
- 210: Prozessor
- 212: Kommunikationsschnittstelle

## Patentansprüche

1. Verfahren zum Erstellen von Pseudonymverknüpfungen zwischen Datensätzen (116, 146, 176) einer Mehrzahl von Registern (114, 144, 174) unter Verwendung eines Verknüpfungscomputersystems (200),
wobei die Mehrzahl von Registern zumindest ein erstes und ein zweites Register (114, 144) umfasst, wobei jedes der Register (114, 144, 174) jeweils eine Mehrzahl von Datensätzen umfasst, denen jeweils ein datensatzspezifisches Pseudonym (118, 138, 178) zugeordnet ist und die jeweils eine registerspezifischen Datenstruktur (112, 142, 172) aufweisen, wobei die registerspezifischen Datenstrukturen (112, 142, 172) jeweils festlegen, welche Strukturelemente die Datensätze (116, 146, 176) des jeweiligen Registers (114, 144, 174) umfassen, wobei jedes der Register (114, 144, 174) jeweils von einem Registercomputersystem (100, 130, 160) verwaltet wird,
wobei das Verfahren umfasst:
• Senden einer ersten Datenabfrage eines ersten Datensatzes (116) des ersten Registers (114) von dem Verknüpfungscomputersystem (200) an ein das erste Register (114) verwaltendes erstes Registercomputersystem (100), wobei die erste Datenabfrage zum Erstellen einer ersten Pseudonymverknüpfung (208) zwischen dem ersten Datensatz (116) und einem Datensatz des zweiten Registers (144) Datenwerte abfragt, die in dem ersten Datensatz (116) für ein oder mehreren ersten Strukturelementen gespeichert sind, welche den Datensätzen des ersten und des zweiten Registers (114, 144) gemäß den Datenstrukturen (112, 142) der beiden Register (114, 144) gemeinsam sind,
• Empfangen einer Antwort auf die erste Datenabfrage von dem ersten Registercomputersystem (100) durch das Verknüpfungscomputersystem (200) mit einem ersten Abfrageergebnis, welches die in dem ersten Datensatz (116) gespeicherten Datenwerte der ersten Strukturelemente umfasst und mit einem öffentlichen kryptographischen Schlüssel (138) des zweiten Registers (144) verschlüsselt ist,
• Senden einer ersten Pseudonymabfrage mit dem verschlüsselten ersten Abfrageergebnis von dem Verknüpfungscomputersystem (200) an ein das zweite Register (144) verwaltendes zweites Registercomputersystem (130),
• falls das zweite Register (144) einen zweiten Datensatz (146) umfasst, in welchem für Strukturelemente, die mit den ersten Strukturelementen übereinstimmen, Datenwerte gespeichert sind, die mit den Datenwerten der ersten Strukturelemente übereinstimmen, Empfangen einer Antwort auf die erste Pseudonymabfrage von dem zweiten Registercomputersystem (130) durch das Verknüpfungscomputersystem (200) mit einem zweiten Pseudonym (148) des zweiten Datensatzes (146),
• Speichern der ersten Pseudonymverknüpfung (208) zwischen einem ersten Pseudonym (118) des ersten Datensatzes (116) und dem empfangenen zweiten Pseudonym (148) des zweiten Datensatzes (146) durch das Verknüpfungscomputersystem (200) in einem Speicher (202) des Verknüpfungscomputersystems (200).

2. Verfahren nach Anspruch 1, wobei die erste Datenabfrage des ersten Datensatzes (116) zum Identifizieren des abzufragenden ersten Datensatzes (116) das erste Pseudonym (118) des ersten Datensatzes (116) umfasst und/oder
Wobei die erste Datenabfrage des ersten Datensatzes (116) den öffentlichen kryptographischen Schlüssel (138) des zweiten Registers (144) umfasst und/oder
wobei die Antwort auf die erste Datenabfrage des ersten Datensatzes (116) das erste Pseudonym (118) des ersten Datensatzes (116) umfasst.

3. Verfahren nach einem der vorangehenden Ansprüche, wobei das Verfahren ferner für jeden weiteren Datensatz der Mehrzahl von Datensätzen des ersten Registers (114) jeweils umfasst:
• Senden einer Datenabfrage des jeweiligen weiteren Datensatzes des ersten Registers (114) von dem Verknüpfungscomputersystem (200) an das erste Registercomputersystem (100), wobei die Datenabfrage zum Erstellen weiterer Pseudonymverknüpfungen zwischen dem jeweiligen weiteren Datensatz und einem Datensatz des zweiten Registers (144) Datenwerte abfragt, die in dem jeweiligen weiteren Datensatz für die ein oder mehreren ersten Strukturelementen gespeichert sind, welche den Datensätzen des ersten und des zweiten Registers (114, 144) gemeinsam sind,
• Empfangen einer Antwort auf die Datenabfrage des jeweiligen weiteren Datensatzes von dem ersten Registercomputersystem (100) durch das Verknüpfungscomputersystem (200) mit einem weiteren Abfrageergebnis, welches die in dem jeweiligen weiteren Datensatz gespeicherten Datenwerte der ersten Strukturelemente umfasst und mit dem öffentlichen kryptographischen Schlüssel (138) des zweiten Registers (144) verschlüsselt ist,
• Senden einer Pseudonymabfrage für den jeweiligen weiteren Datensatz mit dem verschlüsselten weiteren Abfrageergebnisse von dem Verknüpfungscomputersystem (200) an das zweite Registercomputersystem (130),
• falls das zweite Register (144) einen Datensatz umfasst, in welchem für Strukturelemente, die mit den ersten Strukturelementen übereinstimmen, Datenwerte gespeichert sind, die mit den Datenwerten der ersten Strukturelemente des weiteren Datensatzes übereinstimmen, Empfangen einer Antwort auf die Pseudonymabfrage für den jeweiligen weiteren Datensatz von dem zweiten Registercomputersystem (130) durch das Verknüpfungscomputersystem (200) mit einem weiteren zweiten Pseudonym des jeweiligen weiteren Datensatzes des zweiten Registers (144),
• Speichern einer weiteren Pseudonymverknüpfung zwischen einem weiteren ersten Pseudonym des jeweiligen weiteren Datensatzes des ersten Registers (114) und dem empfangenen weiteren zweiten Pseudonym des jeweiligen weiteren Datensatzes des zweiten Registers (144) durch das Verknüpfungscomputersystem (200) in einem Speicher (202) des Verknüpfungscomputersystems (200).

4. Verfahren nach Anspruch 3, wobei die Datenabfrage des jeweiligen weiteren Datensatzes des ersten Registers (114) zum Identifizieren des jeweiligen weiteren Datensatzes das weitere erste Pseudonym des jeweiligen weiteren Datensatzes umfasst und/oder
wobei die Antwort auf die Datenabfrage des jeweiligen weiteren Datensatzes des ersten Registers (114) das weitere ersten Pseudonym des jeweiligen weiteren Datensatzes umfasst.

5. Verfahren nach einem der vorangehenden Ansprüche, wobei das Verfahren ferner ein Bestimmen dritter Register (174) der Mehrzahl von Registern neben dem zweiten Register (144) umfasst, deren Datensätze gemäß ihrer jeweiligen registerspezifischen Datenstruktur (172) ein oder mehrere weitere Strukturelemente mit den Datensätzen des ersten Registers (114) gemeinsam haben,
wobei von dem Verknüpfungscomputersystem (200) für jedes der dritten Register (174) jeweils eine weitere Datenabfrage des ersten Datensatzes (116) an das erste Registercomputersystem (100) gesendet wird, eine Antwort auf die entsprechende weitere Datenabfrage des ersten Datensatzes (116) mit einem weiteren ersten Abfrageergebnis des ersten Datensatzes (116) empfangen wird, welches mit einem öffentlichen kryptographischen Schlüssel (168) des entsprechenden dritten Registers (174) verschlüsselt ist, eine weitere erste Pseudonymabfrage mit dem verschlüsselten weiteren ersten Abfrageergebnis an ein das entsprechende dritte Register (174) verwaltendes dritte Registercomputersystem (160) gesendet wird und, falls das entsprechende dritte Register (174) einen dritten Datensatz (176) umfasst, in welchen mit dem weiteren ersten Abfrageergebnis übereinstimmende Datenwerte für übereinstimmende Strukturelemente gespeichert sind, eine Antwort auf die weitere erste Pseudonymabfrage mit einem dritten Pseudonym (178) des dritten Datensatzes (176) vom dem entsprechenden dritten Registercomputersystem (160) empfangen und eine weitere Pseudonymverknüpfung zwischen dem ersten Pseudonym (118) des ersten Datensatzes (116) und dem empfangenen dritten Pseudonym (178) des dritten Datensatzes (176) in einem Speicher (202) des Verknüpfungscomputersystems (200) gespeichert wird,
wobei beispielsweise: für jeden weiteren Datensatz der Mehrzahl von Datensätzen des ersten Registers (114) von dem Verknüpfungscomputersystem (200) für jedes der bestimmten dritten Register (174) eine weitere Datenabfrage des entsprechenden weiteren Datensatzes des ersten Registers (114) an das erste Registercomputersystem (100) gesendet wird, eine Antwort auf die entsprechende weitere Datenabfrage mit einem weiteren Abfrageergebnis des entsprechenden weiteren Datensatzes des ersten Registers (114) empfangen wird, welches mit einem öffentlichen kryptographischen Schlüssel (168) des entsprechenden dritten Registers (174) verschlüsselt ist, eine weitere Pseudonymabfrage mit dem verschlüsselten weiteren Abfrageergebnis an das entsprechende dritte Registercomputersystem (160) gesendet wird und, falls das entsprechende dritte Register (174) einen vierten Datensatz umfasst, in welchen mit dem weiteren Abfrageergebnis übereinstimmende Datenwerte übereinstimmender Strukturelemente gespeichert sind, eine Antwort auf die weitere Pseudonymabfrage mit einem vierten Pseudonym des vierten Datensatzes vom dem entsprechenden dritten Registercomputersystem (160) empfangen und eine weitere Pseudonymverknüpfung zwischen dem weiteren ersten Pseudonym (118) des jeweiligen weiteren Datensatzes des ersten Registers (114) und dem vierten Pseudonym des vierten Datensatzes in einem Speicher (202) des Verknüpfungscomputersystems (200) gespeichert wird.

6. Verfahren nach einem der vorangehenden Ansprüche, wobei die Mehrzahl von Registern N Register (114, 144, 174) umfasst, wobei N eine natürliche Zahl größer zwei ist, wobei von dem Verknüpfungscomputersystem (200) ferner beginnend mit dem zweiten Register (144) jedes der Register bis zum (N-1)-ten Register der Reihe nach darauf geprüft wird, ob für einen der Datensätze das entsprechende n-te Register, wobei n eine natürliche Zahl von 2 bis N-1 ist, eines der Register n+1 bis N, welchen ein oder mehrere Strukturelemente mit dem n-ten Register gemeinsam sind, einen Datensatz umfasst, in welchem für die ein oder mehrere gemeinsamen Strukturelemente übereinstimmende Datenwerte gespeichert sind, und, falls ein Datensatz mit entsprechenden übereinstimmenden Datenwerte für gemeinsame Strukturelemente in einem der Register n+1 bis N ermittelt wird, eine Pseudonymverknüpfung zwischen einem Pseudonym des geprüften Datensatzes des n-ten Registers und einem Pseudonym des ermittelten Datensatzes in dem Speicher (202) des Verknüpfungscomputersystems (200) gespeichert wird.

7. Verfahren nach einem der vorangehenden Ansprüche, wobei das Verfahren ferner umfasst:
• Empfangen einer Definition der ersten Datenstruktur (112) des ersten Registers (114) von dem ersten Registercomputersystem (100) durch das Verknüpfungscomputersystem (200),
• Empfangen einer Definition der zweiten Datenstruktur (142) des zweiten Registers (144) von dem zweiten Registercomputersystem (130) durch das Verknüpfungscomputersystem (200),
• Bestimmen der ein oder mehreren ersten Strukturelemente durch das Verknüpfungscomputersystem (200), welche den Datensätzen des ersten und des zweiten Registers (144) gemäß einem Abgleich der beiden empfangenen Datenstrukturen (112, 142) der beiden Register (114, 144) gemeinsam sind.

8. Verfahren nach Anspruch 7, wobei es eine Voraussetzung für eine Verwendung der bestimmten ersten Strukturelemente zum Erstellen einer Pseudonymverknüpfung ist, dass die ein oder mehreren ersten Strukturelemente zumindest ein oder mehrere Strukturelemente deren Datenwerte für sich genommen und/oder in Kombination miteinander jeweils eindeutig für die Datensätze sind, und/oder
wobei das Verknüpfungscomputersystem (200) von jedem der Register (114, 144, 174) der Mehrzahl von Registern jeweils eine Datenstruktur (112, 142, 172) des entsprechenden Registers (114, 144, 174) von einem das entsprechende Register (114, 144, 174) verwaltenden Registercomputersystem (100, 130, 160) empfängt, wobei das Verknüpfungscomputersystem (200) für jede paarweise Kombination der Register (114, 144, 174) der Mehrzahl von Registern jeweils bestimmt, welche ein oder mehreren Strukturelemente der Datensätze der beiden Register der entsprechenden paarweisen Kombination den Datensätzen beider Register gemeinsam sind.

9. Verfahren nach einem der vorangehen Ansprüche, wobei die registerspezifischen Datenstrukturen (112, 142, 172) für die Strukturelemente der Datensätzen des entsprechenden Registers ferner jeweils Datenformate festlegen, in welchen Datenwerte der entsprechenden Strukturelemente in den entsprechenden Datensätzen gespeichert werden.

10. Verfahren nach Anspruch 9, wobei das Verfahren ferner ein Bestimmen von ersten Abfrageregeln (206) für die ersten Strukturelemente umfasst, wobei die ersten Abfrageregeln (206) für diejenigen Strukturelemente der ersten Strukturelemente, deren Datenwerte in den Datensätzen des ersten Registers (114) jeweils in einem ersten Datenformat gespeichert sind, welches sich von einem zweiten Datenformat unterscheidet, in welchem Datenwerte der entsprechenden Strukturelemente in Datensätzen des zweiten Registers (144) jeweils gespeichert sind, eine Transformation der jeweiligen ersten Datenformate in die jeweiligen zweiten Datenformate definiert, und/oder
wobei die erste Datenabfrage des ersten Datensatzes (116) die ersten Abfrageregeln (206) umfasst, wobei das erste Abfrageergebnis die ersten Datenwerte derjenigen ersten Strukturelemente, für welche die ersten Abfrageregeln (206) eine Transformation von einem ersten Datenformat des ersten Registers (114) in ein zweites Datenformat des zweiten Registers (144) definieren, transformiert in dem zweiten Datenformat umfasst, und/oder
wobei die erste Pseudonymabfrage die ersten Abfrageregeln (206) umfasst, um dem zweiten Registercomputersystem (130) Definitionen ein oder mehrere Transformationen für die ersten Datenwerte der ersten Strukturelemente von dem ersten Datenformat des ersten Registers (114) in das zweite Datenformat des zweiten Registers (144) bereitzustellen, und/oder
wobei für jede paarweise Kombination der Register (114, 144, 174) der Mehrzahl von Registern jeweils Abfrageregeln für diejenigen Strukturelemente bestimmt werden, welche Datensätzen der beiden Register der entsprechenden paarweise Kombination gemeinsam sind und in denen Datensätze in den entsprechenden beiden Registern in unterschiedlichen Formaten gespeichert sind, wobei die bestimmten Abfrageregeln für die entsprechenden Strukturelemente jeweils eine Transformation von einem der unterschiedlichen Datenformate in das andere der unterschiedlichen Datenformate der beiden Register definieren.

11. Verfahren nach einem der vorangehenden Ansprüche, wobei das Verfahren ferner umfasst:
• Empfangen des ersten Pseudonyms (118) des ersten Datensatzes (116) des ersten Registers (114) von dem ersten Registercomputersystem (100) durch das Verknüpfungscomputersystem (200),
• Speichern des ersten Pseudonyms (118) in dem Speicher (202) des Verknüpfungscomputersystems (200), und/oder
wobei das Verfahren ferner umfasst:
• Empfangen des öffentlichen kryptographischen Schlüssels (138) des zweiten Registers (144) von dem zweiten Registercomputersystem (130) durch das Verknüpfungscomputersystem (200),
• Speichern des öffentlichen kryptographischen Schlüssels (138) des zweiten Registers (144) durch das Verknüpfungscomputersystem (200) in dem Speicher (202) des Verknüpfungscomputersystems (200),
wobei das Verfahren für jedes der Register (114, 144, 174) der Mehrzahl von Registern beispielsweise jeweils umfasst:
• Empfangen eines öffentlichen kryptographischen Schlüssels (108, 138, 168) des entsprechenden Registers (114, 144, 174) von dem Registercomputersystem (100, 130, 160) des entsprechenden Registers (114, 144, 174) durch das Verknüpfungscomputersystem (200),
• Speichern des empfangenen öffentlichen kryptographischen Schlüssels (108, 138, 168) des entsprechenden Registers (114, 144, 174) durch das Verknüpfungscomputersystem (200) in dem Speicher (202) des Verknüpfungscomputersystems (200).

12. Verfahren nach eine der vorangehenden Ansprüche, wobei es sich bei den Pseudonymen (118, 148, 178) der Datensätze (116, 136, 176) zumindest eines der Register (114, 144, 174) der Mehrzahl der Register jeweils um einen Datenwert der entsprechenden Datensätze (116, 136, 176) handelt und/oder
wobei es sich bei den Pseudonymen (118, 148, 178) der Datensätze (116, 136, 176) zumindest eines der Register (114, 144, 174) der Mehrzahl der Register jeweils um ein Ergebnis einer auf den entsprechenden Datensatz (116, 136, 176) angewendete kryptographische Funktion, insbesondere eine kryptographische Einwegfunktion, handelt.

13. Verfahren nach einem der vorangehenden Ansprüche, wobei das Verfahren ferner umfasst:
• Empfangen eines Änderungshinweises des ersten Datensatzes (116) des ersten Registers (114) von dem ersten Registercomputersystem (100) durch das Verknüpfungscomputersystem (200), wobei der Änderungshinweis das erste Pseudonym (118) des ersten Datensatzes (116) und eine Angabe ein oder mehrerer von der Änderung betroffenen Strukturelemente des ersten Datensatzes (116) umfasst,
• Bestimmen aller Pseudonymverknüpfungen des ersten Pseudonyms (118) des ersten Datensatzes (116) des ersten Registers (114) mit weiteren Pseudonymen von weiteren Datensätzen weiterer Register der Mehrzahl von Registern, welche jeweils ein oder mehrere der von der Änderung betroffenen Strukturelemente umfassen,
für jede der bestimmten Pseudonymverknüpfungen jeweils:
• Senden einer Änderungsabfrage des ersten Datensatzes (116) des ersten Registers (114) durch das Verknüpfungscomputersystem (200) an das erste Registercomputersystem (100), wobei die Änderungsabfrage geänderte Strukturelemente des ersten Datensatzes (116) angibt, welche den Datensätzen des ersten und des entsprechenden weiteren Registers gemäß den Datenstrukturen der beiden Register gemeinsam sind,
• Empfangen einer Antwort auf die Änderungsabfrage von dem ersten Registercomputersystem (100) durch das Verknüpfungscomputersystem (200) mit einer Änderungsangabe, welche mit dem öffentlichen kryptographischen Schlüssel des entsprechenden weiteren Registers verschlüsselt ist und die Änderungen der Datenwerte der geänderten Strukturelemente angibt, welche den Datensätzen des ersten und des entsprechenden weiteren Registers gemäß den Datenstrukturen der beiden Register gemeinsam sind,
• Senden einer Änderungsaufforderung mit der verschlüsselten Änderungsangabe von dem Verknüpfungscomputersystem (200) an ein das weitere Register verwaltendes weiteres Registercomputersystem, wobei die Änderungsaufforderung das weitere Pseudonym umfasst, mit welchem das erste Pseudonym (118) gemäß der bestimmten Pseudonymverknüpfung verknüpft ist, und das weitere Registercomputersystem dazu auffordert, die in der verschlüsselten Änderungsangabe angegebenen Änderungen an dem durch das weitere Pseudonym identifizierten weiteren Datensatz des weiteren Registers vorzunehmen.

14. Verfahren nach Anspruch 13, wobei die Änderungsabfrage des ersten Datensatzes (116) zum Identifizieren des abzufragenden ersten Datensatzes (116) das erste Pseudonym (118) des ersten Datensatzes (116) umfasst und/oder
wobei die Änderungsabfrage des ersten Datensatzes (116) für jede der bestimmten Pseudonymverknüpfungen jeweils den öffentlichen kryptographischen Schlüssel des entsprechenden weiteren Registers umfasst und/oder
wobei für jede der bestimmten Pseudonymverknüpfungen die Änderungsabfrage des ersten Datensatzes (116) jeweils Abfrageregeln umfasst, welche ein oder mehrere Transformationen für ein oder mehrere der geänderten Strukturelemente des ersten Datensatzes (116) definieren, wobei die Änderungsangabe die Änderungen der Datenwerte derjenigen geänderten Strukturelemente, für welche die Abfrageregeln eine Transformation von einem Datenformat des ersten Registers (114) in ein Datenformat des weiteren Registers definiert, transformiert in dem Datenformat des weiteren Registers angibt, und/oder
wobei für jede der bestimmten Pseudonymverknüpfungen die Änderungsaufforderung jeweils Abfrageregeln umfasst, welche ein oder mehrere Transformationen für ein oder mehrere der geänderten Strukturelemente des ersten Datensatzes (116) definieren, um dem weiteren Registercomputersystem Definitionen der ein oder mehrere Transformationen der in der verschlüsselten Änderungsangabe angegebenen Änderungen von dem Datenformat des ersten Registers (114) in das Datenformat des weiteren Registers bereitzustellen, und/oder
wobei das Verfahren ferner umfasst:
• Empfangen eines aus dem geänderten ersten Datensatz (116) berechneten geänderten ersten Pseudonym (118) von dem ersten Registercomputersystem (100) durch das Verknüpfungscomputersystem (200),
• Ersetzen des gespeicherten ersten Pseudonyms (118) mit dem empfangenen geänderten ersten Pseudonym (118) durch das Verknüpfungscomputersystem (200) in dem Speicher (202) des Verknüpfungscomputersystems (200), und/oder
wobei das Verfahren ferner für jeden der Datensätze, welche gemäß den bestimmten Pseudonymverknüpfungen mit dem geänderten ersten Datensatz (116) verknüpft sind, umfasst:
• Empfangen einer Antwort auf die Änderungsaufforderung von dem weiteren Registercomputersystem durch das Verknüpfungscomputersystem (200), wobei die Antwort auf die Änderungsaufforderung ein aus dem gemäß der Änderungsaufforderung geänderten weiteren Datensatz des weiteren Registers berechnetes geändertes weiteres Pseudonym umfasst,
• Ersetzen des für den entsprechenden weiteren Datensatz gespeicherten weiteren Pseudonyms mit dem entsprechenden empfangenen geänderten Pseudonym durch das Verknüpfungscomputersystem (200) in dem Speicher (202) des Verknüpfungscomputersystems (200).

15. Verknüpfungscomputersystem (200) zum Erstellen von Pseudonymverknüpfungen zwischen Datensätzen (116, 146, 176) einer Mehrzahl von Registern (114, 144, 174), wobei das Verknüpfungscomputersystem (200) einen Prozessor (210) und einen Speicher (202) mit Programminstruktionen (204) umfasst,
wobei die Mehrzahl von Registern zumindest ein erstes und ein zweites Register (114, 144) umfasst, wobei jedes der Register (114, 144, 174) jeweils eine Mehrzahl von Datensätzen umfasst, denen jeweils ein datensatzspezifisches Pseudonym (118, 148, 178) zugeordnet ist und die jeweils eine registerspezifischen Datenstruktur (112, 142, 172) aufweisen, wobei die registerspezifischen Datenstrukturen (112, 142, 172) jeweils festlegen, welche Strukturelemente die Datensätze (116, 146, 176) des jeweiligen Registers (114, 144, 174) umfassen, wobei jedes der Register (114, 144, 174) jeweils von einem Registercomputersystem (100, 130, 160) verwaltet wird,
wobei ein Ausführen der Programminstruktionen (204) durch den Prozessor (210) das Verknüpfungscomputersystem (200) dazu veranlasst ein Verfahren auszuführen, welches umfasst:
• Senden einer ersten Datenabfrage eines ersten Datensatzes (116) des ersten Registers (114) von dem Verknüpfungscomputersystem (200) an ein das erste Register (114) verwaltendes erstes Registercomputersystem (100), wobei die erste Datenabfrage zum Erstellen einer ersten Pseudonymverknüpfung (208) zwischen dem ersten Datensatz (116) und einem Datensatz des zweiten Registers (144) Datenwerte abfragt, die in dem ersten Datensatz (116) für ein oder mehreren ersten Strukturelementen gespeichert sind, welche den Datensätzen des ersten und des zweiten Registers (114, 144) gemäß den Datenstrukturen der (112, 142) beiden Register (114, 144) gemeinsam sind,
• Empfangen einer Antwort auf die erste Datenabfrage von dem ersten Registercomputersystem (100) durch das Verknüpfungscomputersystem (200) mit einem ersten Abfrageergebnis, welches die in dem ersten Datensatz (116) gespeicherten Datenwerte der ersten Strukturelemente umfasst und mit einem öffentlichen kryptographischen Schlüssel (138) des zweiten Registers (144) verschlüsselt ist,
• Senden einer ersten Pseudonymabfrage mit dem verschlüsselten ersten Abfrageergebnis von dem Verknüpfungscomputersystem (200) an ein das zweite Register (144) verwaltendes zweites Registercomputersystem (130),
• falls das zweite Register (144) einen zweiten Datensatz (136) umfasst, in welchem für Strukturelemente, die mit den ersten Strukturelementen übereinstimmen, Datenwerte gespeichert sind, die mit den Datenwerten der ersten Strukturelemente übereinstimmen, Empfangen einer Antwort auf die erste Pseudonymabfrage von dem zweiten Registercomputersystem (130) durch das Verknüpfungscomputersystem (200) mit einem zweiten Pseudonym (148) des zweiten Datensatzes (136),
• Speichern der ersten Pseudonymverknüpfung (208) zwischen einem ersten Pseudonym (118) des ersten Datensatzes (116) und dem empfangenen zweiten Pseudonym (148) des zweiten Datensatzes (136) durch das Verknüpfungscomputersystem (200) in einem Speicher (202) des Verknüpfungscomputersystems (200).

16. System (192) umfassend das Verknüpfungscomputersystem (200) nach Anspruch 15 sowie ein oder mehrere Registercomputersysteme (100, 130, 160), welche jeweils eines der Register (114, 144, 174) der Mehrzahl von Register verwalten.

## Claims

1. Method for creating alias links between data records (116, 146, 176) of a plurality of registers (114, 144, 174) using a link computer system (200),
wherein the plurality of registers contain at least a first and a second register (114, 144), wherein each of the registers (114, 144, 174) contains a plurality of data records, to each of which a data-record-specific alias (118, 138, 178) is assigned and which each comprise a register-specific data structure (112, 142, 172), wherein the register-specific data structures (112, 142, 172) each specify which structural elements are contained in the data records (116, 146, 176) of the relevant register (114, 144, 174), wherein each of the registers (114, 144, 174) is managed by a register computer system (100, 130, 160),
wherein the method comprises:
• sending a first data query of a first data record (116) of the first register (114) from the link computer system (200) to a first register computer system (100) managing the first register (114), wherein the first data query for creating a first alias link (208) between the first data record (116) and a data record of the second register (144) queries data values which are stored in the first data record (116) for one or more first structural elements which are common to the data records of the first and the second register (114, 144) according to the data structures (112, 142) of the two registers (114, 144),
• receiving a response to the first data query from the first register computer system (100) by means of the link computer system (200) with a first query result that contains the data values of the first structural elements stored in the first data record (116) and is encrypted with a cryptographic public key (138) of the second register (144),
• sending a first alias query with the encrypted first query result from the link computer system (200) to a second register computer system (130) managing the second register (144),
• if the second register (144) contains a second data record (146) in which, for structural elements matching the first structural elements, data values matching the data values of the first structural elements are stored, receiving a response to the first alias query from the second register computer system (130) by means of the link computer system (200) with a second alias (148) of the second data record (146),
• storing the first alias link (208) between a first alias (118) of the first data record (116) and the received second alias (148) of the second data record (146) by means of the link computer system (200) in a memory (202) of the link computer system (200).

2. Method according to claim 1, wherein the first data query of the first data record (116) for identifying the first data record (116) to be queried contains the first alias (118) of the first data record (116) and/or
wherein the first data query of the first data record (116) contains the cryptographic public key (138) of the second register (144) and/or
wherein the response to the first data query of the first data record (116) contains the first alias (118) of the first data record (116).

3. Method according to any of the preceding claims, wherein the method further comprises, for each further data record of the plurality of data records of the first register (114):
• sending a data query of the relevant further data record of the first register (114) from the link computer system (200) to the first register computer system (100), wherein the data query for creating further alias links between the relevant further data record and a data record of the second register (144) queries data values which are stored in the relevant further data record for the one or more first structural elements which are common to the data records of the first and the second register (114, 144),
• receiving a response to the data query of the relevant further data record from the first register computer system (100) by means of the link computer system (200) with a further query result that contains the data values of the first structural elements stored in the relevant further data record and is encrypted with the cryptographic public key (138) of the second register (144),
• sending an alias query for the relevant further data record with the encrypted further query results from the link computer system (200) to the second register computer system (130),
• if the second register (144) contains a data record in which, for structural elements matching the first structural elements, data values matching the data values of the first structural elements of the further data record are stored, receiving a response to the alias query for the relevant further data record from the second register computer system (130) by means of the link computer system (200) with a further second alias of the relevant further data record of the second register (144),
• storing a further alias link between a further first alias of the relevant further data record of the first register (114) and the received further second alias of the relevant further data record of the second register (144) by means of the link computer system (200) in a memory (202) of the link computer system (200).

4. Method according to claim 3, wherein the data query of the relevant further data record of the first register (114) for identifying the relevant further data record contains the further first alias of the relevant further data record and/or
wherein the response to the data query of the relevant further data record of the first register (114) contains the further first alias of the relevant further data record.

5. Method according to any of the preceding claims, wherein the method further comprises determining third registers (174) of the plurality of registers in addition to the second register (144), the data records of which have one or more further structural elements in common with the data records of the first register (114), according to its relevant register-specific data structure (172),
wherein a further data query of the first data record (116) is sent to the first register computer system (100) by the link computer system (200) for each of the third registers (174), a response to the corresponding further data query of the first data record (116) is received with a further first query result of the first data record (116) which is encrypted with a cryptographic public key (168) of the corresponding third register (174), a further first alias query with the encrypted further first query result is sent to a third register computer system (160) managing the corresponding third register (174) and, if the corresponding third register (174) contains a third data record (176) in which data values matching the further first query result for matching structural elements are stored, a response to the further first alias query with a third alias (178) of the third data record (176) is received by the corresponding third register computer system (160) and a further alias link between the first alias (118) of the first data record (116) and the received third alias (178) of the third data record (176) is stored in a memory (202) of the link computer system (200),
wherein, for example: for each further data record of the plurality of data records of the first register (114), a further data query of the corresponding further data record of the first register (114) is sent to the first register computer system (100) by the link computer system (200) for each of the determined third registers (174), a response to the corresponding further data query is received with a further query result of the corresponding further data record of the first register (114) which is encrypted with a cryptographic public key (168) of the corresponding third register (174), a further alias query with the encrypted further query result is sent to the corresponding third register computer system (160) and, if the corresponding third register (174) contains a fourth data record in which data values matching the further query result for matching structural elements are stored, a response to the further alias query with a fourth alias of the fourth data record is received by the corresponding third register computer system (160) and a further alias link between the further first alias (118) of the relevant further data record of the first register (114) and the fourth alias of the fourth data record is stored in a memory (202) of the link computer system (200).

6. Method according to any of the preceding claims, wherein the plurality of registers contains N registers (114, 144, 174), where N is a natural number greater than two, wherein the link computer system (200) further sequentially checks, beginning with the second register (144) of each of the registers up to the (N-1)th register, whether, for one of the data records, the corresponding nth register, where n is a natural number of 2 to N-1, of one of the registers n+1 to N which has one or more structural elements in common with the nth register contains a data record in which matching data values for the one or more common structural elements are stored and, if a data record containing corresponding matching data values for common structural elements is identified in one of the registers n+1 to N, an alias link between an alias of the checked data record of the nth register and an alias of the identified data record is stored in the memory (202) of the link computer system (200).

7. Method according to any of the preceding claims, wherein the method further comprises:
• receiving a definition of the first data structure (112) of the first register (114) from the first register computer system (100) by means of the link computer system (200),
• receiving a definition of the second data structure (142) of the second register (144) from the second register computer system (130) by means of the link computer system (200),
• determining the one or more first structural elements which are common to the data records of the first and the second register (144) according to a comparison of the two received data structures (112, 142) of the two registers (114, 144) by means of the link computer system (200).

8. Method according to claim 7, wherein it is a requirement for the use of the determined first structural elements for creating an alias link that the one or more first structural elements are at least one or more structural elements of which the data values, taken in isolation and/or in combination with one another, are each unique for the data records, and/or
wherein the link computer system (200) receives, from each of the registers (114, 144, 174) of the plurality of registers, a data structure (112, 142, 172) of the corresponding register (114, 144, 174) from a register computer system (100, 130, 160) managing the corresponding register (114, 144, 174), wherein the link computer system (200) in each case determines, for each paired combination of the registers (114, 144, 174) of the plurality of registers, which of the one or more structural elements of the data records of the two registers of the corresponding paired combination are common to the data records of both registers.

9. Method according to any of the preceding claims, wherein the register-specific data structures (112, 142, 172) for the structural elements of the data records of the corresponding register each also specify data formats in which data values of the corresponding structural elements are stored in the corresponding data records.

10. Method according to claim 9, wherein the method further comprises determining first query rules (206) for the first structural elements, wherein the first query rules (206) define a transformation from the respective first data formats into the respective second data formats for those structural elements of the first structural elements of which the data values are each stored in the data records of the first register (114) in a first data format which differs from a second data format in which data values of the corresponding structural elements are each stored in data records of the second register (144), and/or
wherein the first data query of the first data record (116) contains the first query rules (206), wherein the first query result contains the first data values of those first structural elements for which the first query rules (206) define a transformation from a first data format of the first register (114) into a second data format of the second register (144), in a transformed manner in the second data format, and/or
wherein the first alias query contains the first query rules (206), in order to provide the first register computer system (130) with definitions of the one or more transformations for the first data values of the first structural elements from the first data format of the first register (114) into the second data format of the second register (144), and/or
wherein, for each paired combination of the registers (114, 144, 174) of the plurality of registers, query rules are determined for those structural elements which are common to data records of the two registers of the corresponding paired combination and in which data records are stored in the corresponding two registers in different formats, wherein the determined query rules for the corresponding structural elements each define a transformation from one of the different data formats into the other of the different data formats of the two registers.

11. Method according to any of the preceding claims, wherein the method further comprises:
• receiving the first alias (118) of the first data record (116) of the first register (114) from the first register computer system (100) by means of the link computer system (200),
• storing the first alias (118) in the memory (202) of the link computer system (200), and/or
wherein the method further comprises:
• receiving the cryptographic public key (138) of the second register (144) from the second register computer system (130) by means of the link computer system (200),
• storing the cryptographic public key (138) of the second register (144) by means of the link computer system (200) in the memory (202) of the link computer system (200),
wherein the method for example comprises, for each of the registers (114, 144, 174) of the plurality of registers:
• receiving a cryptographic public key (108, 138, 168) of the corresponding register (114, 144, 174) from the register computer system (100, 130, 160) of the corresponding register (114, 144, 174) by means of the link computer system (200),
• storing the received cryptographic public key (108, 138, 168) of the corresponding register (114, 144, 174) by means of the link computer system (200) in the memory (202) of the link computer system (200).

12. Method according to any of the preceding claims, wherein the aliases (118, 148, 178) of the data records (116, 136, 176) of at least one of the registers (114, 144, 174) of the plurality of registers are each a data value of the corresponding data records (116, 136, 176) and/or
the aliases (118, 148, 178) of the data records (116, 136, 176) of at least one of the registers (114, 144, 174) of the plurality of registers are each a result of a cryptographic function, in particular a one-way cryptographic function, applied to the corresponding data record (116, 136, 176).

13. Method according to any of the preceding claims, wherein the method further comprises:
• receiving a modification notice for the first data record (116) of the first register (114) from the first register computer system (100) by means of the link computer system (200), wherein the modification notice contains the first alias (118) of the first data record (116) and an indication of one or more structural elements of the first data record (116) that are affected by the modification,
• determining all the alias links of the first alias (118) of the first data record (116) of the first register (114) to further aliases of further data records of further registers of the plurality of registers, which each contain one or more of the structural elements affected by the modification,
the following being carried out for each of the determined alias links:
• sending a modification query of the first data record (116) of the first register (114) to the first register computer system (100) by means of the link computer system (200), wherein the modification query indicates modified structural elements of the first data record (116) which are common to the data records of the first and the corresponding further register according to the data structures of the two registers,
• receiving a response to the modification query from the first register computer system (100) by means of the link computer system (200) with a modification indication, which is encrypted with the cryptographic public key of the corresponding further register and indicates the modifications to the data values of the modified structural elements which are common to the data records of the first and the corresponding further register according to the data structures of the two registers,
• sending a modification request with the encrypted modification indication from the link computer system (200) to a further register computer system managing the further register, wherein the modification request contains the further alias to which the first alias (118) is linked in accordance with the determined alias link, and the further register computer system requests that the modifications indicated in the encrypted modification indication are made to the further data record, identified by the further alias, of the further register.

14. Method according to claim 13, wherein the modification query of the first data record (116) for identifying the first data record (116) to be queried contains the first alias (118) of the first data record (116) and/or
wherein the modification query of the first data record (116) contains the cryptographic public key of the corresponding further register for each of the determined alias links and/or
wherein, for each of the determined alias links, the modification query of the first data record (116) contains query rules which define one or more transformations for one or more of the modified structural elements of the first data record (116), wherein the modification indication indicates the modifications to the data values of those modified structural elements for which the query rules define a transformation from a data format of the first register (114) into a data format of the further register, in a transformed manner in the data format of the further register, and/or
wherein, for each of the determined alias links, the modification request contains query rules which define one or more transformations for one or more of the modified structural elements of the first data record (116), in order to provide the further register computer system with definitions of the one or more transformations of the modifications indicated in the encrypted modification indication from the data format of the first register (114) into the data format of the further register, and/or
wherein the method further comprises:
• receiving a modified first alias (118) calculated from the modified first data record (116) from the first register computer system (100) by means of the link computer system (200),
• replacing the stored first alias (118) with the received modified first alias (118) by means of the link computer system (200) in the memory (202) of the link computer system (200), and/or
wherein the method further comprises the following for each of the data records that are linked to the modified first data record (116) in accordance with the determined alias links:
• receiving a response to the modification request from the further register computer system by means of the link computer system (200), wherein the response to the modification request contains a modified further alias calculated from the further data record of the further register modified in accordance with the modification request,
• replacing the further alias stored for the corresponding further data record with the corresponding received modified alias by means of the link computer system (200) in the memory (202) of the link computer system (200).

15. Link computer system (200) for creating alias links between data records (116, 146, 176) of a plurality of registers (114, 144, 174), wherein the link computer system (200) comprises a processor (210) and a memory (202) containing program instructions (204),
wherein the plurality of registers contain at least a first and a second register (114, 144), wherein each of the registers (114, 144, 174) contains a plurality of data records, to each of which a data-record-specific alias (118, 148, 178) is assigned and which each comprise a register-specific data structure (112, 142, 172), wherein the register-specific data structures (112, 142, 172) each specify which structural elements are contained in the data records (116, 146, 176) of the relevant register (114, 144, 174), wherein each of the registers (114, 144, 174) is managed by a register computer system (100, 130, 160),
wherein execution of the program instructions (204) by the processor (210) prompts the link computer system (200) to perform a method which comprises:
• sending a first data query of a first data record (116) of the first register (114) from the link computer system (200) to a first register computer system (100) managing the first register (114), wherein the first data query for creating a first alias link (208) between the first data record (116) and a data record of the second register (144) queries data values which are stored in the first data record (116) for one or more first structural elements which are common to the data records of the first and the second register (114, 144) according to the data structures (112, 142) of the two registers (114, 144),
• receiving a response to the first data query from the first register computer system (100) by means of the link computer system (200) with a first query result that contains the data values of the first structural elements stored in the first data record (116) and is encrypted with a cryptographic public key (138) of the second register (144),
• sending a first alias query with the encrypted first query result from the link computer system (200) to a second register computer system (130) managing the second register (144),
• if the second register (144) contains a second data record (136) in which, for structural elements matching the first structural elements, data values matching the data values of the first structural elements are stored, receiving a response to the first alias query from the second register computer system (130) by means of the link computer system (200) with a second alias (148) of the second data record (136),
• storing the first alias link (208) between a first alias (118) of the first data record (116) and the received second alias (148) of the second data record (136) by means of the link computer system (200) in a memory (202) of the link computer system (200).

16. System (192) comprising the link computer system (200) according to claim 15 and one or more register computer systems (100, 130, 160) which each manage one of the registers (114, 144, 174) of the plurality of registers.

## Revendications

1. Procédé de création de liens pseudonymes entre des ensembles de données (116, 146, 176) d'une multiplicité de registres (114, 144, 174) moyennant l'utilisation d'un système informatique de liaison (200),
dans lequel la multiplicité des registres comprend au moins un premier et un deuxième registre (114, 144), où chacun des registres (114, 144, 174) comprend respectivement une multiplicité d'ensembles de données, auxquels sont associés respectivement des pseudonymes (118, 138, 178) spécifiques aux ensembles de données et qui présentent respectivement une structure de donnée (112, 142, 172) spécifique au registre, où les structures de données (112, 142, 172) spécifiques aux registres déterminent respectivement quels éléments de structure les ensembles de données (116, 146, 176) du registre (114, 144, 174) respectif sont compris, où chacun des registres (114, 144, 174) est géré respectivement par un système informatique de registre (100, 130, 160),
le procédé comprenant :
• l'envoi d'une première interrogation de données d'un premier ensemble de données (116) du premier registre (114) à partir du système informatique de liaison (200) vers un système informatique de registre (100) gérant le premier registre (114), où la première interrogation de données, pour la création d'une première liaison de pseudonymes (208) entre le premier ensemble de données (116) et un ensemble de données du deuxième registre (144) interroge des valeurs de données qui sont stockées dans le premier ensemble de données (116) pour un ou plusieurs premiers éléments de structure, lesquels sont communs aux ensembles de données du premier et du deuxième registre (114, 144) selon les structures de données (112, 142) des deux registres (114, 144),
• la réception d'une réponse suite à la première interrogation de données à partir du premier système informatique de registre (100) par le système informatique de liaison (200) avec un premier résultat d'interrogation, lequel comprend les valeurs de données des premiers éléments de structure stockés dans le premier ensemble de données (116) et est chiffré avec une clé cryptographique publique (138) du deuxième registre (144),
• l'envoi d'une première interrogation de pseudonymes avec le premier résultat d'interrogation chiffré à partir du système informatique de liaison (200) à un deuxième système informatique de registre (130) gérant le deuxième registre (144),
• dans le cas où le deuxième registre (144) comprend un deuxième ensemble de données (146), dans lequel sont stockées des valeurs de données pour des éléments de structure qui correspondent avec les premiers éléments de structure, qui correspondent aux valeurs de données des premiers éléments de structure, la réception d'une réponse à la première interrogation de pseudonymes à partir du deuxième système informatique de registre (130) par le système informatique de liaison (200) avec un deuxième pseudonyme (148) du deuxième ensemble de données (146),
• l'enregistrement de la première liaison de pseudonymes (208) entre un premier pseudonyme (118) du premier ensemble de données (116) et le deuxième pseudonyme (148) du deuxième ensemble de donnés (146) reçu par le système informatique de liaison (200) dans une mémoire (202) du système informatique de liaison (200).

2. Procédé selon la revendication 1, dans lequel la première interrogation de données du premier ensemble de données (116) pour l'identification du premier ensemble de données (116) à interroger comprend le premier pseudonyme (118) du premier ensemble de données (116), et/ou
dans lequel la première interrogation de données du premier ensemble de données (116) comprend la clé cryptographique publique (138) du deuxième registre (144), et/ou
dans lequel la réponse à la première interrogation de données du premier ensemble de données (116) comprend le premier pseudonyme (118) du premier ensemble de données (116).

3. Procédé selon l'une des revendications précédentes, le procédé comprenant en outre, pour chaque nouvel ensemble de données de la multiplicité d'ensembles de données du premier registre (114), respectivement :
• l'envoi d'une interrogation de données de le nouvel ensemble de données respectif du premier registre (114) à partir du système informatique de liaison (200) vers le premier système informatique de registre (100), où l'interrogation de données, pour la création de nouvelles liaisons de pseudonymes entre le nouvel ensemble de données respectif et un ensemble de données du deuxième registre (144), interroge des valeurs de données qui sont stockées dans le nouvel ensemble de données respectif pour un ou plusieurs premiers éléments de structure, lesquels sont communs aux ensembles de données du premier et du deuxième registre (114, 144),
• la réception d'une réponse suite à la l'interrogation de données du nouvel ensemble de données respectif à partir du premier système informatique de registre (100) par le système informatique de liaison (200) avec un nouveau résultat d'interrogation, lequel comprend les valeurs de données des premiers éléments de structure stockés dans le nouvel ensemble de données et est chiffré avec une clé cryptographique publique (138) du deuxième registre (144),
• l'envoi d'une interrogation de pseudonymes avec le nouvel ensemble de données respectif avec les nouveaux résultats d'interrogation chiffrés à partir du système informatique de liaison (200) vers le deuxième système informatique de registre (130),
• dans le cas où le deuxième registre (144) comprend un ensemble de données, dans lequel sont stockées des valeurs de données pour des éléments de structure qui correspondent avec les premiers éléments de structure, qui correspondent aux valeurs de données des premiers éléments de structure du nouvel ensemble de données, la réception d'une réponse à la première interrogation de pseudonymes pour le nouvel ensemble de données respectif à partir du deuxième système informatique de registre (130) par le système informatique de liaison (200) avec un nouveau deuxième pseudonyme du nouvel ensemble de données respectif du deuxième registre (144),
• l'enregistrement de la nouvelle liaison de pseudonymes entre un nouveau premier pseudonyme du premier ensemble de données respectif du premier registre (114) et le nouveau deuxième pseudonyme reçu du nouvel ensemble de donnés respectif du deuxième registre (144) par le système informatique de liaison (200) dans une mémoire (202) du système informatique de liaison (200).

4. Procédé selon la revendication 3, dans lequel l'interrogation de données du nouvel ensemble de données respectif du premier registre (114) comprend le nouveau premier pseudonyme du nouvel ensemble de données respectif pour l'identification du nouvel ensemble de données respectif, et/ou
dans lequel la réponse à l'interrogation de données du nouvel ensemble de données respectif du premier registre (114) comprend le nouveau premier pseudonyme du nouvel ensemble de données respectif.

5. Procédé selon l'une des revendications précédentes, le procédé comprenant en outre une détermination de registres tiers (174) de la multiplicité des registres en plus du deuxième registre (144), dont les ensembles de données, selon leur structure de données (172) spécifiques aux registres respectives, possèdent un ou plusieurs autres éléments de structure en commun avec les ensembles de données du premier registre (114),
dans lequel, à partir du système informatique de liaison (200), pour chacun des registres tiers (174), respectivement une nouvelle interrogation de données du premier ensemble de données (116) est envoyée au premier système informatique de registre (100), une réponse à la nouvelle interrogation de données correspondante du premier ensemble de données (116) est reçue avec un nouveau premier résultat d'interrogation du premier ensemble de données (116), lequel est chiffré avec une clé cryptographique publique (168) du registre tiers (174) correspondant, une nouvelle première interrogation de pseudonyme est envoyée avec le nouveau premier résultat d'interrogation chiffré à un système informatique de registre (160) tiers gérant le registre tiers (174) correspondant, et, dans le cas où le registre tiers (174) correspondant comprend un troisième ensemble de données (176), dans lequel des valeurs de données en concordance avec le nouveau premier résultat d'interrogation sont stockées pour des éléments de structure concordants, une réponse à la nouvelle première interrogation de pseudonymes est reçue avec un troisième pseudonyme (178) du troisième ensemble de données (176) à partir du troisième système informatique de registre (160) correspondant et une nouvelle liaison de pseudonymes entre le premier pseudonyme (118) du premier ensemble de données (116) et le troisième pseudonyme (178) reçu du troisième ensemble de données (176) est stockée dans une mémoire (202) du système informatique de liaison (200),
dans lequel, par exemple : pour chaque nouvel ensemble de données de la multiplicité des ensembles de données du premier registre (114), une nouvelle interrogation de données du nouvel ensemble de données correspondant du premier registre (114) est envoyée au premier système informatique de registre (100) par le système informatique de liaison (200) pour chacun des registres tiers (174) déterminés, une réponse à la nouvelle interrogation de données correspondante est reçue avec un nouveau résultat d'interrogation du nouvel ensemble de données correspondant du premier registre (114), lequel est chiffré avec une clé cryptographique publique (168) du registre tiers (174) correspondant, une nouvelle interrogation de pseudonyme est envoyée avec le nouveau résultat d'interrogation chiffré au troisième système informatique de registre (160) correspondant, et, dans le cas où le troisième registre (174) correspondant comprend un quatrième ensemble de données, dans lequel des valeurs de données d'éléments de structure en concordance avec le nouveau résultat d'interrogation sont stockés, une réponse à la nouvelle interrogation de pseudonymes est reçue avec un quatrième pseudonyme du quatrième ensemble de données par le troisième système informatique de registre (160) correspondant et une nouvelle liaison de pseudonymes entre le nouveau premier pseudonyme (118) du nouvel ensemble de données respectif du premier registre (114) et le quatrième pseudonyme du quatrième ensemble de données est stockée dans une mémoire (202) du système informatique de liaison (200).

6. Procédé selon l'une des revendications précédentes, dans lequel la multiplicité des registres comprend N registres (114, 144, 174), où N est un nombre naturel supérieur à deux, où, à partir du système informatique de liaison (200), chacun des registres jusqu'au (N - 1)^{ième} registre de la série, en commençant en outre avec le deuxième registre (144), est contrôlé si un des ensembles de données contient le n^{ième} registre correspondant, où n est un nombre naturel entre 2 et N - 1, un des registres entre n + 1 et N, auxquels un ou plusieurs éléments de structure sont communs avec le n^{ième} registre, comprend un ensemble de données dans lequel des valeurs de données en concordance sont stockées pour l'élément ou les éléments de structure communs, dans le cas où un ensemble de données avec des valeurs de données en concordance correspondantes est déterminé pour des éléments de structure communs dans un des registres n + 1 à N, une liaison de pseudonymes entre un pseudonyme de l'ensemble de données vérifié du n^{ième} registre vérifié et un pseudonyme de l'ensemble de données déterminé est stockée dans une mémoire (202) du système informatique de liaison (200).

7. Procédé selon l'une des revendications précédentes, le procédé comprenant en outre :
• la réception d'une définition de la première structure de données (112) du premier registre (114) à partir du premier système informatique de registre (100) par le système informatique de liaison (200),
• la réception d'une définition de la deuxième structure de données (142) du deuxième registre (144) à partir du deuxième système informatique de registre (130) par le système informatique de liaison (200),
• la détermination d'un ou de plusieurs premiers éléments de structure par le système informatique de liaison (200), lesquels sont communs aux ensembles de données du premier et du deuxième registre (144) selon une comparaison des deux structures de données (112, 142) reçues des deux registres (114, 144).

8. Procédé selon la revendication 7, dans lequel il y a une condition préalable pour une utilisation des premiers éléments de structure déterminés pour l'établissement d'une liaison de pseudonymes, que le premier ou les premiers éléments de structure sont au moins un ou plusieurs éléments de structure dont les valeurs de données, à titre individuel et/ou en liaison les unes avec les autres, sont respectivement univoques pour les ensembles de données, et/ou
dans lequel le système informatique de liaison (200) reçoit, à partir de chacun des registres (114, 144, 174) de la multiplicité des registres, respectivement une structure de données (112, 142, 172) du registre (114, 144, 174) correspondant à partir d'un système informatique de registre (100, 130, 160) gérant le registre (114, 144, 174) correspondant, où le système informatique de liaison (200), pour chaque combinaison par paires des registres (114, 144, 174) de la multiplicité des registres, détermine respectivement, lesquels ont un ou plusieurs éléments de structure des ensembles de données des deux registres de la combinaison par paires correspondante communs aux ensembles de données des deux registres.

9. Procédé selon l'une des revendications précédentes, dans lequel les structures de données (112, 142, 172) spécifiques aux registres, pour les éléments de structure des ensembles de données du registre correspondant, déterminent en outre respectivement des formats de données dans lesquels des valeurs de données des éléments de structure correspondants sont enregistrées dans les ensembles de données correspondants.

10. Procédé selon la revendication 9, le procédé comprenant en outre une détermination de premières règles d'interrogation (206) pour les premiers éléments de structure, où les premières règles d'interrogation (206) pour les éléments de structure en question des premiers éléments de structure dont les valeurs de données sont stockées respectivement dans un premier format de donnée dans les ensembles de données du premier registre (114), lequel format se distingue d'un deuxième format de données, dans lequel des valeurs de données des éléments de structure correspondant sont respectivement stockées dans des ensembles de données du deuxième registre (144), définit une transformation des premiers formats de données respectifs dans les deuxièmes formats de données respectifs et/ou
dans lequel la première interrogation de données du premier ensemble de données (116) comprend les premières règles d'interrogation (206), où le premier résultat d'interrogation comprend les premières valeurs de données des premiers éléments de structure en question, pour lesquels les premières règles d'interrogation (206) définissent une transformation à partir d'un premier format de données du premier registre (114) dans un deuxième format de données du deuxième registre (144), transforme dans le deuxième format de données, et/ou
dans lequel la première interrogation de pseudonymes comprend les premières règles d'interrogation (206) pour mettre à disposition du deuxième système informatique de registre (130) des définitions d'une ou de plusieurs transformations pour les premières valeurs de données des premiers éléments de structure du premier format de données du premier registre (114) dans le deuxième format de données du deuxième registre (144), et/ou
dans lequel, pour chaque combinaison par paires des registres (114, 144, 174) de la multiplicité des registres, des règles d'interrogation sont respectivement déterminées pour les éléments de structure en question, lesquels sont communs à des ensembles de données des deux registres de la combinaison par paire correspondante et dans lesquels des ensembles de données sont stockés dans les deux registres correspondants dans des formats différents, où les règles d'interrogation déterminées pour les éléments de structure correspondants définissent respectivement une transformation de l'un des formats de données différent dans l'autre format de données différent des deux registres.

11. Procédé selon l'une des revendications précédentes, le procédé comprenant en outre :
• la réception du premier pseudonyme (118) du premier ensemble de données (116) du premier registre (114) à partir du premier système informatique de registre (100) par le système informatique de liaison (200),
• l'enregistrement du premier pseudonyme (118) dans la mémoire (202) du système informatique de liaison (200), et/ou
le procédé comprenant en outre :
• la réception de la clé cryptographique publique (138) du deuxième registre (144) à partir du deuxième système informatique de registre (130) par le système informatique de liaison (200),
• l'enregistrement de la clé cryptographique publique (138) du deuxième registre (144) par le système informatique de liaison (200) dans la mémoire (202) du système informatique de liaison (200),
le procédé comprenant respectivement, pour chacun des registres (114, 144, 174) de la multiplicité des registres, par exemple :
• la réception d'une clé cryptographique publique (108, 138, 168) du registre (114, 144, 174) correspondant à partir du système informatique de registre (100, 130,160) du registre (114, 144, 174) correspondant par le système informatique de liaison (200),
• l'enregistrement de la clé cryptographique publique (108, 138, 168) du registre (114, 144, 174) correspondant reçue par le système informatique de liaison (200) dans la mémoire (202) du système informatique de liaison (200).

12. Procédé selon l'une des revendications précédentes, dans lequel, dans le cas des pseudonymes (118, 148, 178) des ensembles de données (116, 136, 176) d'au moins un des registres (114, 144, 174) de la multiplicité des registres, il s'agit respectivement d'une valeur de donnée des ensembles de données (116, 136, 176) correspondants, et/ou
dans lequel, dans le cas des pseudonymes (118, 148, 178) des ensembles de données (116, 136, 176) d'au moins un des registres (114, 144, 174) de la multiplicité des registres, il s'agit respectivement d'un résultat d'une fonction cryptographique appliquée pour l'ensemble de données (116, 136, 176) correspondant, notamment d'une fonction cryptographique à sens unique.

13. Procédé selon l'une des revendications précédentes, le procédé comprenant en outre :
• la réception d'un avis de modification du premier ensemble de données (116) du premier registre (114) à partir du premier système informatique de registre (100) par le système informatique de liaison (200), où l'avis de modification comprend le premier pseudonyme (118) du premier ensemble de données (116) et une indication d'un ou de plusieurs éléments de structure du premier ensemble de données (116) concerné par la modification,
• la détermination de toutes les liaisons de pseudonymes du premier pseudonyme (118) du premier ensemble de données (116) du premier registre (114) avec des nouveaux pseudonymes de nouveaux ensembles de données de nouveaux registres de la multiplicité des registres, lesquels comprennent respectivement un ou plusieurs des éléments de structure concernés par la modification,
pour chacune des liaisons de pseudonymes déterminées, respectivement :
• l'envoi d'une interrogation de modification du premier ensemble de données (116) du premier registre (114) par le système informatique de liaison (200) vers le premier système informatique de registre (100), où l'interrogation de modification indique des éléments de structure modifiés du premier ensemble de données (116), lesquels sont communs aux ensembles de données du premier et du nouveau registre correspondant conformément aux structures de données des deux registres,
• la réception d'une réponse suite à l'interrogation des modifications à partir du premier système informatique de registre (100) par le système informatique de liaison (200) avec une indication de modification, laquelle est chiffrée avec la clé cryptographique publique du nouveau registre correspondant et indique les modifications des valeurs de données des éléments de structure modifiés, lesquelles sont communes aux ensembles de données du premier registre et du nouveau registre correspondant conformément aux structures de données des deux registres,
• l'envoi d'une notification de modification avec l'indication de modification chiffrée à partir du système informatique de liaison (200) à un nouveau système informatique de registre gérant le nouveau registre, où la notification de modification comprend le nouveau pseudonyme avec lequel le premier pseudonyme (118) est lié conformément à la liaison de pseudonymes déterminée, et le nouveau système informatique de registre est notifié pour effectuer les modifications indiquées dans l'indication de modification chiffrée au niveau du nouvel ensemble de données du nouveau registre identifié par le nouveau pseudonyme.

14. Procédé selon la revendication 13, dans lequel l'interrogation de modification du premier ensemble de données (116) pour l'identification du premier ensemble de données (116) à interroger comprend le premier pseudonyme (118) du premier ensemble de données (116), et/ou
dans lequel l'interrogation de modification du premier ensemble de données (116) pour chacune des liaisons de pseudonymes déterminées, comprend respectivement la clé cryptographique publique du nouveau registre correspondant, et/ou
dans lequel, pour chacune des liaisons de pseudonymes déterminées, l'interrogation de modification du premier ensemble de données (116) comprend respectivement des règles d'interrogation, lesquelles définissent une ou plusieurs transformations pour un ou plusieurs éléments de structure du premier ensemble de données (116) modifiés, où l'indication de modifications indique les modifications des valeurs de données des éléments de structure modifiés en question pour lesquels les règles d'interrogation définissent une transformation à partir d'un format de données du premier registre (114) vers un format de données du nouveau registre, transformé dans le format de données du nouveau registre, et/ou
dans lequel, pour chacune des liaisons de pseudonymes déterminées, l'interrogation de modification comprend respectivement des règles d'interrogation, lesquelles définissent une ou plusieurs transformations pour un ou plusieurs éléments de structure du premier ensemble de données (116) modifiés, afin de mettre à disposition du nouveau système informatique de registres des définitions de la transformation ou des transformations des modifications indiquées dans l'indication de modifications chiffrée à partir du format de données du premier registre (114) vers le format de données du nouveau registre, et/ou
le procédé comprenant en outre :
• la réception d'un premier pseudonyme (118) modifié calculé à partir du premier ensemble de données (116) modifié à partir du premier système informatique de registre (100) par le système informatique de liaison (200),
• le remplacement du premier pseudonyme (118) enregistré avec le premier pseudonyme (118) modifié reçu par le système informatique de liaison (200) dans la mémoire (202) du système informatique de liaison (200), et/ou
le procédé comprenant en outre, pour chacun des ensembles de données, lesquels sont liés conformément aux liaisons de pseudonymes déterminées avec le premier ensemble de données (116) modifié :
• la réception d'une réponse suite à la notification de modification à partir du nouveau système informatique de registre par le système informatique de liaison (200), où la réponse suite à la notification de modification comprend un nouveau pseudonyme modifié calculé à partir du nouvel ensemble de données modifié conformément à la notification de modification,
• le remplacement du nouveau pseudonyme enregistré pour le nouvel ensemble de données correspondant avec le pseudonyme modifié reçu correspondant par le système informatique de liaison (200) dans la mémoire (202) du système informatique de liaison (200)

15. Système informatique de liaison (200) permettant l'établissement de liaisons de pseudonymes entre des ensembles de données (116, 146, 176) d'une multiplicité de registres (114, 144, 174), le système informatique de liaison (200) comprenant un processeur (210) et une mémoire (202) avec des instructions de programme (204),
dans lequel la multiplicité de registres comprend au moins un premier et un deuxième registre (114, 144), où chacun des registres (114, 144, 174) comprend respectivement une multiplicité d'ensembles de données, auxquels sont associés respectivement des pseudonymes (118, 148, 178) spécifiques aux ensembles de données et qui présentent respectivement une structure de données (112, 142, 172) spécifique au registre, où les structures de données (112, 142, 172) spécifiques aux registres déterminent respectivement quels éléments de structure les ensembles de données (116, 146, 176) du registre (114, 144, 174) respectif sont compris, où chacun des registres (114, 144, 174) est géré respectivement par un système informatique de registre(100, 130, 160),
dans lequel une exécution des instructions de programme (204) par le processeur (210) fait en sorte que le système informatique de liaison (200) exécute un procédé, lequel comprend :
• l'envoi d'une première interrogation de données d'un premier ensemble de données (116) du premier registre (114) à partir du système informatique de liaison (200) vers un système informatique de registre (100) gérant le premier registre (114), où la première interrogation de données, pour la création d'une première liaison de pseudonymes (208) entre le premier ensemble de données (116) et un ensemble de données du deuxième registre (144), interroge des valeurs de données qui sont stockées dans le premier ensemble de données (116) pour un ou plusieurs premiers éléments de structure, lesquels sont communs aux ensembles de données du premier et du deuxième registre (114, 144) conformément aux structures de données (112,142) des deux registres (114, 144),
• la réception d'une réponse suite à la première interrogation de données à partir du premier système informatique de registre (100) par le système informatique de liaison (200) avec un premier résultat d'interrogation, lequel comprend les valeurs de données des premiers éléments de structure stockés dans le premier ensemble de données (116) et est chiffré avec une clé cryptographique publique (138) du deuxième registre (144),
• l'envoi d'une première interrogation de pseudonymes avec le premier résultat d'interrogation chiffré à partir du système informatique de liaison (200) à un deuxième système informatique de registre (130) gérant le deuxième registre (144),
• dans le cas où le deuxième registre (144) comprend un deuxième ensemble de données (136), dans lequel sont stockées des valeurs de données pour des éléments de structure qui correspondent avec les premiers éléments de structure, qui correspondent aux valeurs de données des premiers éléments de structure, la réception d'une réponse suite à la première interrogation de pseudonymes à partir du deuxième système informatique de registre (130) par le système informatique de liaison (200) avec un deuxième pseudonyme (148) du deuxième ensemble de données (136),
• l'enregistrement de la première liaison de pseudonymes (208) entre un premier pseudonyme (118) du premier ensemble de données (116) et le deuxième pseudonyme (148) du deuxième ensemble de donnés (136) reçu par le système informatique de liaison (200) dans une mémoire (202) du système informatique de liaison (200).

16. Système (192) comprenant un système informatique de liaison (200) selon la revendication 15 ainsi qu'un ou plusieurs systèmes informatiques de registres (100, 130, 160), lesquels gèrent respectivement l'un des registres (114, 144, 174) de la multiplicité des registres.
